(19) Europäisches Patentamt
European Patent Office
Office européen des brevets

(11) EP 3 330 188 B1

(12) EUROPEAN PATENT SPECIFICATION

(45) Date of publication and mention of the grant of the patent:
**19.02.2020 Bulletin 2020/08**

(21) Application number: **16901184.8**

(22) Date of filing: **12.07.2016**

(51) Int Cl.:
***B64G 1/22*** *(2006.01)* ***H01M 2/02*** *(2006.01)*
***H01M 2/10*** *(2006.01)* ***B64G 1/40*** *(2006.01)*
***B64G 1/42*** *(2006.01)* ***B64G 1/66*** *(2006.01)*
***H01M 10/052*** *(2010.01)* ***B64G 1/50*** *(2006.01)*
***B64G 1/10*** *(2006.01)* ***F16F 7/104*** *(2006.01)*
*F16F 15/02 (2006.01)* *H01M 10/48 (2006.01)*

(86) International application number:
**PCT/CN2016/000380**

(87) International publication number:
**WO 2017/193228 (16.11.2017 Gazette 2017/46)**

(54) **MULTIFUNCTIONAL STRUCTURE FOR ELECTRICAL ENERGY AND MECHANICAL ENVIRONMENT MANAGEMENT**

MULTIFUNKTIONELLE STRUKTUR ZUR VERWALTUNG VON ELEKTRISCHER ENERGIE UND MECHANISCHER UMGEBUNG

STRUCTURE MULTIFONCTIONNELLE POUR LA GESTION DE L’ÉNERGIE ÉLECTRIQUE ET DE L’ENVIRONNEMENT MÉCANIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.05.2016 CN 201610307086**

(43) Date of publication of application:
**06.06.2018 Bulletin 2018/23**

(73) Proprietor: **National University of Defense Technology**
**Changsha, Hunan 410008 (CN)**

(72) Inventors:
- **LI, Dongxu**
  **Changsha**
  **Hunan 410008 (CN)**
- **YIN, Changping**
  **Changsha**
  **Hunan 410008 (CN)**
- **WU, Jun**
  **Changsha**
  **Hunan 410008 (CN)**
- **LI, Dezhan**
  **Hunan 410008 (CN)**

(74) Representative: **Krauns, Christian**
**Wallinger Ricker Schlotter Tostmann**
**Patent- und Rechtsanwälte Partnerschaft mbB**
**Zweibrückenstraße 5-7**
**80331 München (DE)**

(56) References cited:
**CN-A- 103 107 299** **CN-A- 103 972 441**
**CN-U- 204 793 006** **CN-U- 204 834 785**
**DE-A1- 4 340 007** **JP-A- 2013 206 619**
**US-A1- 2006 234 119** **US-A1- 2012 164 504**
**US-A1- 2013 295 419**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 330 188 B1

## Description

### TECHNICAL FIELD

The present invention belongs to the field of multidisciplinary technologies in materials, mechanics and energies, and more particularly relates to a multi-functional structure for electrical energy and mechanical environment management.

### BACKGROUND

For modern spacecraft structures, it is urgently needed to develop a multi-functional structure technology to integrate independent functional units, such as electricity, heat, propulsion, vibration reduction and protection, together with a structural platform, so as to realize the integration of structure, function, electrical energy and material, thus eliminating a great deal of redundant weight and volume of conventional structures, realizing a light weight and a minimum volume of structure, increasing load/mass ratio and function/structure ratio of a system platform, decreasing the research and development cost, prolonging the service life of a spacecraft and improving the performance of the spacecraft. However, by now, no relevant literature has been reported yet. The US 2006/234119 A1 discloses a framed lithium battery cell group including a first frame member and a second frame member. The frame members are locked together, clamping the lithium battery cell pack on the seal edge surfaces, thereby providing structural rigidity and protection from damage due to handling and vibration. Each of the frame members has multiple pins and sockets on the side opposite the clamping surface to facilitate aligning and stacking multiple lithium battery cell pack and frame assemblies to form a lithium battery cell group. Each of the frame members include a buss bar capture feature having a bus bar inserted therein for electrically connecting all of the terminals for a given lithium battery pack group to the buss bar. The DE 43 40 007 A1 discloses a mounting apparatus for a car battery. The mounting apparatus includes springs or rubber blocks beneath the battery to damp out vibrations from the engine. Alternatively, the whole battery may be held in a container made of thick rubber, with a rubber lid. The damping is designed for those frequencies present when the engine is idling.

### SUMMARY

In view of the deficiencies of the prior art, the present invention provides a multi-functional structure for electrical energy and mechanical environment management, which can effectively solve the above problems. The multi-functional structure is as defined in the independent claim 1. Further improvements are provided in the dependent claims.

The technical solution adopted by the present invention is as follows:
The present invention provides a multi-functional structure for electrical energy and mechanical environment management, comprising a main structure module, four rechargeable/dischargeable power source modules, a vibration reduction system and a sensor module.

The main structure module comprises a framework (10), an upper cover plate (11) and a lower cover plate (12); wherein the framework (10) has a grid shape with four square hollow cavities, and has an omnidirectional symmetry with respect to three axes of x, y and z; the lower cover plate (12) is fixed on a bottom surface of the framework (10); the upper cover plate (11) is fixed on a top surface of the framework (10); the framework (10), the upper cover plate (11) and the lower cover plate (12) constitute a main bearing structure to have a bearing function.

The four power source modules comprise a power source module I (20), a power source module II (21), a power source module III (22) and a power source module IV (23). Each of the power source modules is embedded in the closed square hollow cavities formed by the framework (10), the upper cover plate (11) and the lower cover plate (12) by means of an elastic support. Each of the closed square hollow cavities is provided only with one of the power source modules. The elastic support comprises an elastic block (30) and an elastic cushion (31); and positive and negative wires of the power source module are extended out of the framework (10) via strong electrical cables and connected to a strong electrical connector (24) disposed on an outer wall of the framework (10) to form a charge/discharge interface. The power source module both has a function of charging for many times and discharging for many times, and functions as an oscillator to dissipate vibration energy.

The elastic block (30) is disposed between the periphery of each of the power source modules and a wall of the square hollow cavity for accommodating the power source module; the elastic cushion (31) is disposed between the bottom surface of each of the power source modules and the lower cover plate (12) and between the top surface of each of the power source modules and the upper cover plate (11).

The power source module, the elastic block (30) and the elastic cushion (31) constitute the vibration reduction system functioning as a ’spring-vibrator’ model, where the elastic block (30) and the elastic cushion (31) function as the elastic support with a certain rigidity and damping, and the power source modules function as a vibrator with a certain quality; wherein a deformation of the elastic support enables the vibration reduction system to absorb vibration and

consume energy, and the power source modules functioning as the vibrator converts structural vibrational energy into kinetic energy of the vibrator to consume the vibrational energy, so that a combined effect of the vibration reduction system and the power source modules reduces the transmission of the vibration in the multi-functional structure and effectively manages the mechanical environment of the power source module.

The sensor module comprises a plurality of temperature sensors and a plurality of acceleration sensors; wherein the temperature sensors are disposed at an inner cavity and an outer sidewall of the power source module and are configured for monitoring temperature of the power source module; the acceleration sensors are disposed at an inner wall of the framework (10), an inner wall of the upper cover plate (11) and an inner wall of the lower cover plate (12) and are configured for measuring the vibration of the framework (10), the upper cover plate (11) and the lower cover plate (12), thus detecting and monitoring the internal electrical energy and vibration management of multi-functional structures.

Preferably, the framework (10) is formed by connecting and assembling two set of square tubes, wherein the first set of square tubes comprise eight rims (10-1) located at edges of the framework (10) and the second set of square tubes comprise four keels (10-2) at the center of the framework (10).

A cross structure is formed by the four keels (10-2) through a cross joint.

The eight rims (10-1) are represented as rims I to VIII, respectively; where four L-shaped structures are formed by the eight rims (10-1), with each of the four L-shaped structures being formed by two of the eight rims through an L-shaped joint.

A symmetrical grid-shaped framework is formed through T-shaped joints by the four L-shaped structures and the cross structure formed by the four keels.

Preferably, each of the keels (10-2) and the rims (10-1) is formed by laying-up a carbon fiber composite material, and a layup pattern is [±45/0/±45]2S.

The cross joint, the L-shaped joint and the T-shaped joint are formed by using titanium alloy material of high specific strength and low thermal expansion coefficient; and the corresponding joint is bonded to each of the framework (10-1) and keel (10-2) by adhesive.

Preferably, an L-shaped angular piece (10-3) is also bonded at each of corners of the framework (10) using a structural adhesive, the angular piece (10-3) is made of polyimide insulating material, is used to reinforce assembly connection of the framework (10) and have an insulation function.

An insulating sheet (10-4) is bonded to mounting position of the acceleration sensor, wherein the insulating sheet (10-4) is also made of the polyimide insulating material, and can insulate the acceleration sensor from the main structure module.

Preferably, each of the upper cover plate (11) and the lower cover plate (12) is a sandwich structure comprising an upper skin, a sandwiched plate, and a lower skin.

The sandwich structure comprises: from top to bottom, the upper skin (11-1), the sandwiched plate (11-2) and the lower skin (11-3), wherein the upper skin (11-1) and the sandwiched plate (11-2) are connected by an adhesive, and the thickness of the thereby formed adhesive layer is controlled within a range of 0.1 mm to 0.2 mm; the lower skin (11-3) and the sandwiched plate (11-2) are connected by an adhesive, and the thickness of the thereby formed adhesive layer is controlled within a range of 0.1mm-0.2mm.

The sandwiched plate (11-2) is in a form of a rib mesh, each of the upper skin (11-1) and the lower skin (11-3) is in a form of a panel, and the upper skin (11-1) and the lower skin (11-3) are identical in structure and material.

Each of the upper skin (11-1), the sandwiched plate (11-2) and the lower skin (11-3) is made of carbon fiber composite material, and a layup pattern of the upper skin (11-1) and the lower skin (11-3) is $[0/\pm45/90/\pm45]_s$; and a layup pattern of the sandwiched plate (11-2) is $[0/+45/90/0]_{2S}$.

Preferably, the upper cover plate (11) and the lower cover plate (12) are provided with a plurality of circular exhaust holes disposed in a regular manner, and the circular exhaust holes are configured as an exhaust passage for gas inside the structure in a process and in a vacuum environment.

The lower cover plate (12) is fixed on the bottom surface of the framework (10) by gluing; the upper cover plate (11) is screwed to the top surface of the framework (10) by screws through thread connection, and screw mounting holes are located at four angular points, a center position of the framework (10), the rims and the keels; the screw is made of a titanium alloy material with a small thermal expansion coefficient, which is suitable for large temperature changes and dramatic changes in the working environment.

Preferably, the elastic block (30) and the elastic cushion (31) is a made of high molecular elastic vinyl-terminated polydimethylsiloxane material, the chemical formula of the material is:

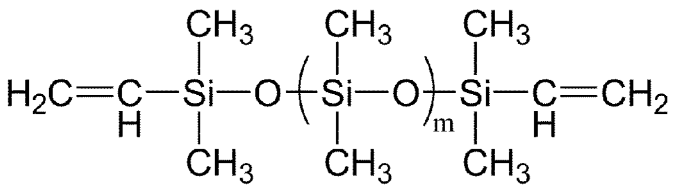

Each of the elastic block (30) and the elastic cushion (31) both has a function of supporting the power source module, and has a function of dissipating a part of the vibration energy by the elastic deformation thereof, thereby having a function of protecting the power source module, and a function of insulating the power source module from the main structure module and cooling the power source module.

Preferably, the elastic block (30) and the elastic cushion (31) are installed in a pre-compressed manner, to achieve an elastic constraint support for the power source module by producing an elastic force based on pre-compression; the elastic block (30) is in a rectangular shape and both ends of the elastic block (30) are in surface contact with an inner side surface of the framework (10) and an outer side surface of the power source module without a fixed connection; the elastic cushion (31) is in a well shape, one surface of the elastic cushion is adhered to a lower surface of the upper cover plate (11) and an upper surface of the lower cover plate (12) by adhesive, and the other surface thereof is only in surface contact with the surface of the power source module without a fixed connection, and each of the elastic block (30) and the elastic cushion (31) is in a pre-compressed state after the installation, and have a supporting function, so that the power source module is kept in the framework (10) in a stationary state.

Preferably, a position limiting block (32) is adhered at a boundary between the inner wall of the framework (10) and each of the ends of both sides of each of the elastic blocks (30) using the structural adhesive for limiting the position of the elastic block (30), to avoid a movement and a displacement of the elastic block (30).

Preferably, the power source module may use a lithium battery.

A plurality of voltage detection lines are extended out from the power source module, and welded to an electrical connector (33) mounted on the outer wall of the framework (10), to form a detection interface for detecting a graded voltage signal of each of the power source modules.

Each of an upper surface of the upper cover plate (11) and a lower surface of the lower cover plate (12) is polished to make the surface of carbon fiber of the entire multi-functional structure has electrical consistent in conductivity.

A copper frame (50) is attached on the upper surface of the upper cover plate (11); a bottom copper foil is attached on the entire surface of the bottom surface of the lower cover plate (12), wherein the bottom copper foil (51) is formed by splicing a plurality of copper foils of a certain width so as to form an integral conductive surface.

A u-shaped copper foil (52) is uniformly attached on the outer wall of the framework (10), wherein the U-shaped copper foil (52) is connected with the copper frame (50) located on the upper cover plate (11) and the bottom copper foil (51) located on the lower cover plate (12), to make the multi-functional structure for electrical energy and mechanical environment management consistent entirely in conductivity.

Each of four corners of the copper frame (50) is mounted with a grounding pile (53), wherein one end of the grounding pile (53) is connected to a ground line of the power source module and the other end of the grounding pile (53) is connected to external ground, so that the multi-functional structure is effectively grounded as a whole through the grounding pile (53).

The multi-functional structure for electrical energy and mechanical environment management according to the present invention has the following advantages:

(1) In the present invention, the structure, by means of embedding the power source modules into the interior of the structure in an elastically restrained way, realizes high integration of multiple functions, such as bearing, power supply and vibration reduction, and by utilizing various lightweight structures such as carbon fiber composite materials and hollow framework structures are used in the structure, thus the weight of the structure is effectively reduced; and meanwhile, due to saving space occupied by the original power sources, the space available for payloads is largely increased. Therefore, the load/mass ratio, the load/volume ratio and the function/structure ratio of the system platform are greatly improved by the present invention.

(2) By adopting vibration reduction design such as the elastic supports, the invention enable the structure to successfully pass the rigorous vibration mechanical environmental assessment during the ascending period of a rocket, thus to meet requirements of space applications; and by considering material selection and structure design of the exhaust holes, the structure can withstand thermal vacuum, thermal cycling and other environmental assessment, so as to adapt to the vacuum working environment in outer space.

## BRIEF DESCRIPTION OF THE DRAWINGS

FIG. 1 is an exploded view of a multi-functional structure of electrical energy and mechanical environment management according to the present invention;

FIG. 2 is a front view of a framework according to the present invention;

FIG. 3 is a perspective view of the framework according to the present invention;

FIG. 4 is a schematic structural view of an L-shaped joint according to the present invention;

FIG. 5 is a schematic structural view of a cross joint according to the present invention;

FIG. 6 is a schematic structural view of the T-shaped joint according to the present invention;

FIG. 7 is a partial enlarged view of a region F in FIG. 3;

FIG. 8 is an exploded view of an upper cover plate or a lower cover plate at an angle according to the present invention;

FIG. 9 is an exploded view of the upper cover plate or the lower cover plate at another angle according to the present invention;

FIG. 10 is a schematic structural view of an elastic cushion according to the present invention;

FIG. 11 is a front view of an assembled state of a power source module according to the present invention;

FIG. 12 is a perspective view of the assembled state of the power source module according to the present invention;

FIG. 13 is a front view of assembled state of an elastic block according to the present invention;

FIG. 14 is a perspective view of the assembled state of the elastic block according to the present invention;

FIG. 15 is a partial enlarged view of a region B in FIG. 14;

FIG. 16 is a schematic diagram of an equivalent vibration reduction model according to the present invention;

FIG. 17 is a schematic diagram of an installation position of a temperature sensor and an acceleration sensor according to the present invention; wherein, WDC represents the temperature sensor; and JSDC represents the acceleration sensor;

FIG. 18 is a top view of the multi-functional structure of electrical energy and mechanical environment management according to the present invention;

FIG. 19 is a bottom view of the multi-functional structure of electrical energy and mechanical environment management according to the present invention;

FIG. 20 is an overall perspective view of the multi-functional structure of electrical energy and mechanical environment management according to the present invention;

FIG. 21 is a schematic view of the multi-functional structure as a bulkhead of a spacecraft according to the present invention;

FIG. 22 is a diagram of an acceleration output response in the X-direction of the multi-functional structure of electrical energy and mechanical environment management; and

FIG. 23 is a diagram of an acceleration output response in the Y-direction of the multi-functional structure of electrical

energy and mechanical environment management.

## DETAILED DESCRIPTION

In order to make the technical problems solved by the present invention, technical solutions and beneficial effects clearer, the present invention is further described in detail below with reference to the accompanying drawings and embodiments. It should be understood that the specific embodiments described herein are only used to explain the present invention, and are not intended to limit the present invention.

In view of the demand for lightweight structure and miniaturization of volume, and taking both structural vibration reduction and charge/discharge requirements into consideration, the present invention provides a multi-functional structure for electrical energy and mechanical environment management which combines together functions of load bearing, vibration reduction, energy storage and measurement.

In combination with FIG. 1 to 23, a multi-functional structure for electrical energy and mechanical environment management according to the present invention includes a main structure module, four rechargeable/dischargeable power source modules, a vibration reduction system and a sensor module. The structure can withstand a wide-band random vibration of 0 to 2000 Hz frequency range and at most 28G mean square root acceleration, at most 1600G impact load, and acceleration load of 10G.

The following sections are described in detail below:

(A) Main structure of the module

The main structure module includes a framework 10, an upper cover plate 11 and a lower cover plate 12. The lower cover plate 12 is fixed on bottom surface of the framework 10. Preferably, the lower cover plate 12 is fixed on the bottom surface of the framework 10 by gluing. The upper cover plate 11 is fixed to the top surface of the framework 10. Preferably, the upper cover plate 11 is screwed fixedly to the top surface of the framework 10 by screws through thread connection, and the screw mounting holes are located at four angular points of the framework 10, a center position of the framework 10, rims and keels of the framework 10; the screw is made of a titanium alloy material with a small thermal expansion coefficient, which is suitable for large changes in temperature and dramatic changes in the working environment. The framework 10, the upper cover plate 11 and the lower cover plate 12 constitute a main carrying structure to have a bearing function.

(1) Framework

The framework 10 has a grid shape with four square hollow cavities, and has an omnidirectional symmetry with respect to three axes of x, y and z, where a coordinate system o-xyz is defined as shown in FIG. 2 and FIG. 3. Specifically, a x-axis and a y-axis lie in a plane of the framework 10, the z-axis is perpendicular to a o-xy plane and forms a right-hand coordinate system together with the x-axis and the y-axis.

The framework 10 is formed by connecting and assembling two set of square tubes, wherein the first set of square tubes include eight rims 10-1 located at edges of the framework 10 and the second set of square tubes include four keels 10-2 at the center of the framework 10; a cross structure is formed by the four keels 10-2 through a cross joint; the eight rims 10-1 are represented as rims I to VIII, respectively. Four L-shaped structures are formed by the eight rims 10-1, with each of the four L-shaped structures being formed by two of the eight rims through an L-shaped joint. Hence, the symmetrical grid-shaped framework is formed by connecting, via T-shaped joints, the four L-shaped structures with the cross structure formed by the four keels.

In addition, each of the keels 10-2 and the rims 10-1 is formed by laying-up a carbon fiber composite material, and a layup pattern is $[\pm 45/0/\pm 45]_{2S}$; the cross joint, the L-shaped joint and the T-shaped joint are all formed by using titanium alloy material of high specific strength and low thermal expansion coefficient; and the corresponding joint is bonded to each of the framework 10-1 and keel 10-2 by adhesive.

A L-shaped angular piece 10-3 is also bonded at eight corners of the framework 10 using a structural adhesive, wherein the angular piece 10-3 is made of polyimide insulating material, is used to reinforce assembly connection of the framework 10 and have an insulation function.

(2) Upper/lower cover plates

Each of the upper cover plate 11 and the lower cover plate 12 is a sandwich structure comprising an upper skin, a sandwiched plate, and a lower skin.

The sandwich structure includes: from top to bottom, the upper skin 11-1, the sandwiched plate 11-2 and the lower skin 11-3, wherein the upper skin 11-1 and the sandwiched plate 11-2 are connected by an adhesive, and the

thickness of the thereby formed adhesive layer is controlled within a range of 0.1 mm to 0.2 mm; the lower skin 11-3 and the sandwiched plate 11-2 are connected by an adhesive, and the thickness of the thereby formed adhesive layer is controlled within a range of 0.1mm-0.2mm.

The sandwiched plate 11-2 is in a form of a rib mesh, where each of the upper skin 11-1 and the lower skin 11-3 is in a form of a panel, and the upper skin 11-1 and the lower skin 11-3 are identical in structures and materials;

In addition, each of the upper skin 11-1, the sandwiched plate 11-2 and the lower skin 11-3 is made of carbon fiber composite material, and a layup pattern of the upper skin 11-1 and the lower skin 11-3 is $[0/\pm45/90/+45]_S$; and a layup pattern of the sandwiched plate 11-2 is $[0/\pm45/90/0]_{2S}$.

The upper cover plate 11 and the lower cover plate 12 are provided with a plurality of circular exhaust holes disposed in a regular arrangement, and the circular exhaust holes are configured as an exhaust passage for gas inside the structure in a technical process and in a vacuum environment.

(B) Rechargeable/dischargeable power source module

The four power source modules can use a lithium battery, and more preferably, a solid state lithium battery. The four power source modules include a power source module I 20, a power source module II 21, a power source module III 22 and a power source module IV 23. By means of an elastic support, each of the power source modules is embedded in the closed square hollow cavities formed by the framework 10, the upper cover plate 11 and the lower cover plate 12. Each of the closed square hollow cavities is provided only with one of the power source modules. The elastic support includes an elastic block 30 and an elastic cushion 31; and positive and negative wires of the power source module are extended out of the framework 10 via strong electrical cables and connected to a strong electrical connector 24 disposed on an outer wall of the framework 10 to form a charge/discharge interface; the power source module both has a function of charging for many times and discharging for many times, and functions as an oscillator to dissipate vibration energy.

A plurality of voltage detection lines are extended out from the power source module, and welded to an electrical connector 33 mounted on the outer wall of the framework 10, to form a detection interface for detecting a graded voltage signal of each of the power source modules.

The power source module can be further connected to an external power source management unit to achieve constant current charge/discharge or constant voltage charge/discharge with a controllable charge/discharge speed, so as to effectively manage the electric energy.

(C) Vibration reduction system

In addition, the elastic block 30 is disposed between the periphery of each of the power source modules and a wall of the square hollow cavity, for accommodating the power source module; the elastic cushion 31 is disposed between the bottom surface of each of the power source modules and the lower cover plate 12 and between the top surface of each of the power source modules and the upper cover plate 11. The power source module, the elastic block 30 and the elastic cushion 31 constitute the vibration reduction system functioning as a 'spring-vibrator' model. The elastic block 30 and the elastic cushion 31 function as the elastic support with a certain rigidity and damping, and the power source modules function as a vibrator with a certain quality. A deformation of the elastic support enables the vibration reduction system to absorb vibration and consume energy, and the power source modules functioning as the vibrator converts structural vibrational energy into kinetic energy of the vibrator to consume the vibrational energy. Hence, the combined effect of the vibration reduction system and the power source modules reduces the transmission of the vibration in the multi-functional structure and effectively manages the mechanical environment of the power source module.

Each of the elastic block 30 and the elastic cushion 31 is a made of high molecular elastic vinyl-terminated polydimethylsiloxane material, the chemical formula of the material is:

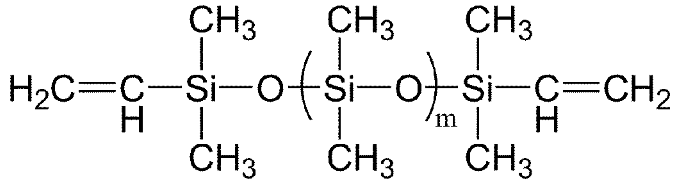

Each of the elastic block 30 and the elastic cushion 31 both has a function of supporting the power source module, and has a function of dissipating a part of the vibration energy by the elastic deformation thereof, thereby having a function of protecting the power source module, and a function of insulating the power source module from the main

structure module and cooling the power source module.

The elastic block 30 is in a rectangular shape and both ends of the elastic block 30 are in surface contact with an inner side surface of the framework 10 and an outer side surface of the power source module without a fixed connection. The elastic cushion 31 is in a well shape, one surface of the elastic cushion is adhered to a lower surface of the upper cover plate 11 and an upper surface of the lower cover plate 12 by adhesive, and the other surface thereof is only in surface contact with the surface of the power source module without a fixed connection. Each of the elastic block 30 and the elastic cushion 31 is in the pre-compressed state after the installation, and have a supporting function, so that the power source module is kept in the framework 10 in a stationary state.

A position limiting block 32 is adhered at a boundary between the inner wall of the framework 10 and each of the ends of both sides of each of the elastic blocks 30 using the structural adhesive for limiting the position of the elastic block 30.

(D) Sensor module

The sensor module comprises a plurality of temperature sensors and a plurality of acceleration sensors. The temperature sensors are disposed at an inner cavity and an outer sidewall of the power source module and are configured for monitoring temperature of the power source module. The acceleration sensors are disposed at an inner wall of the framework 10, an inner wall of the upper cover plate 11 and an inner wall of the lower cover plate 12 and are configured for measuring the vibration of the framework 10, the upper cover plate 11 and the lower cover plate 12, thus detecting and monitoring the internal electrical energy and vibration management of the multi-functional structure.

In addition, in the present invention, a copper frame 50 is attached on the upper surface of the upper cover plate 11, and each of four corners of the copper frame 50 is connected to a grounding pile 53. One end of the grounding pile 53 is connected to a ground line of the power source module and the other end of the grounding pile 53 is connected to external ground, such as the ground of a system structure of a spacecraft. A bottom copper foil 51 is attached on the entire surface of the bottom surface of the lower cover plate 12. A U-shaped copper foil 52 is uniformly attached on the outer wall of the framework 10, where the U-shaped copper foil 52 is connected with the copper frame (50) and the bottom copper foil 51.

By using the above technical scheme, a multi-functional structure for electrical energy and mechanical environmental management has functions of bearing, vibration reduction, energy storage, measurement and the like.

The innovations of the present invention are as follows:

(1) In the present invention, the power source modules are embedded into the interior of the structure in an elastically restrained way, so that the structure has multiple functions, such as bearing, power supply and vibration reduction. Furthermore, various lightweight structures such as carbon fiber composite materials and hollow framework structures are used in the structure, thus effectively reducing weight of the structure. Furthermore, due to saving space occupied by the original power source, space available for payload is increased. Therefore, the load/mass ratio, the load/volume ratio and the function/structure ratio of the system platform are greatly improved according to the present invention.

(2) In the present invention, vibration reduction design such as the elastic support are provided, thereby the structure can pass a vibration mechanical environment test during the ascending period of a rocket so as to meet requirements of space applications. Furthermore, material is suitably selected and structural design such as the exhaust hole is provided, so that the structure can withstand thermal vacuum, thermal cycling and other environment test, so as to adapt to vacuum working environment in space.

The multi-functional structure for electrical energy and mechanical environment management according to the invention has many functions such as bearing, vibration reduction, power supply, storage and data measurement, is used for a certain type of spacecraft, and has an ability of anti-shock and vibration.

The multi-functional structure will be described in detail below in conjunction with an assembly process.

Step 1, a framework is assembled.

The overall shape and structure of the framework are shown in FIG. 2 and FIG. 3. The framework is formed by connecting and assembling square tubes that is made by laying-up M40J/TDE-86 carbon fiber composite material. The square tubes have a cross-sectional size of 30mm $\times$ 25mm and a wall thickness of 2.5mm. The specific layup pattern is shown in Table 1 below. According to forms of the structure, the square tubes consisting of the framework can be divided into two types: the rims located at edges of the framework and the keels at the center of the framework.

The rims and the keels are adhered by coating the structural adhesive (J133) on the joint to obtain the framework. The specific assembling is as follows: a cross structure is formed by a total of four keels through a cross joint; a total of eight rims are represented as rims I to VIII, respectively; where four L-shaped structures are formed by the eight rims, with each of the four L-shaped structures being formed by two of the eight rims through an L-shaped joint; and a

symmetrical grid-shaped framework is formed through T-shaped joints by the four L-shaped structures along with the cross structure formed by the four keels, where the outer envelope size of the grid-shaped framework is 800mm × 800mm × 25mm. The three shapes of joints used are shown in FIGS. 4-6.

In order to reinforce the framework assembling connection, eight L-shaped angular pieces are bonded with the structural adhesive (J133) at each corner of the framework and have a thickness of 1 mm, as shown in FIG. 7.

Table 1 Framework material system and layup pattern

| Component | Material System | Layup Pattern |
|---|---|---|
| Border | M40J/TDE-86 carbon fiber | Thickness of single layer prepreg 0.125mm $[\pm45/0/\pm45]_{2S}$ |
| Keel | M40J/TDE-86 carbon fiber | Thickness of single layer prepreg 0.125mm $[\pm45/0/\pm45]_{2S}$ |
| Joint | TC-4R titanium alloy | / |
| Angular piece | M40J/E648 carbon fiber | Thickness of single layer prepreg 0.125mm $[0/\pm45/90]_S$ |
| Adhesive | J133 | / |

Step 2, upper and lower cover plates are manufactured.

Materials, structure size and Layup Pattern of the upper cover plate and the lower cover plate are exactly the same. The outer envelope size of the upper cover plate and the lower cover plate are both 800mm × 800mm × 5mm, and each of the upper cover plate and the lower cover plate is a sandwich structure comprising an upper skin, a sandwiched plate, and a lower skin. The thickness of the upper skin and the lower skin are 0.96mm. The sandwiched plate is in a form of a composite bar with a thickness of 3 mm, as shown in FIGS. 8 and 9. The upper skin, the sandwiched plate and the lower skin are connected by gluing. In order to strictly control the thickness of the adhesive layer (maintained in a range of 0.1mm to 0.2mm), J47 film is used as the adhesive. Material systems used by the upper/lower cover plate, the thickness thereof and the layup patterns thereof are shown in Table 2 below.

Table 2 The material system of the upper/lower cover plate and layup pattern

| Component | Material System | Thickness /mm | Layup Pattern |
|---|---|---|---|
| Upper skin | M40J/E648 carbon fiber | 1 | Single layer prepreg 0.08mm $[0/\pm45/90/\pm45]_S$ |
| Sandwiched plate | M40J/E648 carbon fiber | 3 | Single layer prepreg 0.15mm $[0/\pm45/90/0]2_S$ |
| Lower skin | M40J/E648 carbon fiber | 1 | Single layer prepreg 0.08mm $[0/\pm45/90/\pm45]_S$ |
| Adhesive layer | J47 film | 0.1~0.2 | / |

After the upper and the lower cover plate are manufactured, the circular exhaust holes are disposed in a regular manner on the surface.

Step 3, the lower cover plate is bonded with the framework.

The lower cover plate and the framework in the step 1 are bonded together using a J133 structural adhesive to form an integrated structure.

Step 4, the lower cover plate is bonded with the elastic cushion.

The elastic cushion is made of K216 silicone rubber material, its structure appearance is in a well shape, as shown in Figure 10. Material systems, structure size and performance parameters of the elastic cushion are shown in Table 3.

Table 3 elastic cushion of the relevant parameters

| Component | Material System | Hardness /A | Layup Pattern | Thickness mm |
|---|---|---|---|---|
| Elastic cushion | K216 silicone rubber | 35~40 | Well shape, outer envelope 300 ×300 | 2.5 |

The four elastic cushions are sequentially bonded to the lower cover plate using J133 adhesive.

Step 5, a power source module is mounted.

The multi-functional structure contains a total of four power source modules, respectively, recorded as the power source module I , II, III, IV. In order to ensure the reliability, in this embodiment, two power source modules adjacent to each other are connected in series to obtain two groups of power sources of the same output voltage, which

are respectively referred to as a main power source and a backup power source. It is known that different numbers of power source modules (for example, three or four) can also be combined in series to obtain DC voltages of different sizes.

The size of the outer envelope of the power source module is 300 mm × 280 mm × 20 mm, the overall shape is shown in FIG. 11 and FIG. 12. Then, the four power source modules are installed in the four square cavities formed by the grid shaped framework and the cover plate, and the lower surface of the power source module is in surface contact with the elastic cushion. The overall schematic diagram of the four power source modules installed in the framework is shown in FIG. 12.

The positive and negative lines of the main/backup power source are extended from slots at the sides of the main/backup power source and are connected to a 5-core strong electrical connector via a C55/0812-18 cable (in this embodiment, a 5-core strong electrical connector produced by Airbon company and having a model specification of MM-2F2-005-P13-2200-ZLP may be employed). A strong electrical connector is disposed on the outer wall of the framework to form a charge/discharge interface for the main/backup power source.

A set of voltage detection lines are extended out from the power source module for detecting a graded voltage signal of each of the power source modules. The voltage detection lines are connected by a cable and welded to a 15-core electrical connector (in this embodiment selects, a 15-core electrical connector produced by Guizhou Aerospace Electric Company and having a model specification of J30JHT15TJSAN01 may be employed), and the electrical connector is also mounted on the outer wall of the framework.

Step 6, an elastic block is mounted.

Like the elastic cushion, the elastic block is also made of K216 silicone rubber. The elastic block is in a rectangular shape and having a structure as shown in FIG. 13 and FIG. 14, and the material system, structure size and performance parameters thereof are shown in Table 4.

Table 4 the relevant parameters of the elastic block

| Component | Material System | Hardness/A | Shape and Size | Thickness mm |
|---|---|---|---|---|
| Elastic block | K216 silicone rubber | 35~40 | Rectangular, 39 × 40 | 24 |

The four sides of the power source module each are connected in surface with the framework via the elastic blocks. Three parallel elastic blocks are used to connect the rims or keels of each framework, and hence the total number of the elastic blocks is 3 × 4 × 4 = 48. There are no fixed connections between the elastic blocks and the power source modules and between the elastic blocks and the framework.

A total 96 position limiting blocks (two position limiting blocks are adopted at the ends of each of the elastic blocks, so that the total number is 2 × 3 × 4 × 4 = 96) are adhered at the inner wall of the framework corresponding to boundaries of the ends of both sides of the elastic blocks (the specific position is shown in FIG. 15) using the J133 structural adhesive. As shown in FIG. 15, the position limiting block is made of T300/E648 fiber fabric layup material and has a size of 10 mm × 5 mm × 2 mm, and is used to limit the position of the elastic block.

After the installation is completed, each of the elastic blocks is in the pre-compressed state and the power source module cannot move inside the framework.

The power source module is connected to the main bearing structure via the elastic block and via the elastic cushion to form the vibration reduction system. The vibration reduction module has two functions: to manage the mechanical environment of the internal power source module so as to protect the power source module; and to dissipate the vibration energy through the deformation of the elastic material so as to reduce the transmission of the vibration in the structure. The principle of vibration reduction is shown in FIG. 16. The power source module of the present invention is equivalent to a vibration reduction element in the figure, i.e., the oscillator having the mass $m_2$, and the elastic support corresponds to a spring with a stiffness k and a damper with a damping coefficient c.

A transfer characteristic of the system can be expressed as:

$$H(\omega)=[Z(\omega)]^{-1}=\frac{\begin{pmatrix} k-\omega^2 m_2 & k \\ k & k-\omega^2 m_1 \end{pmatrix}}{|z|} \quad (1)$$

where $m_1$ represents the mass of the entire multi-functional structure for the electrical energy and mechanical management, and $\omega$ represents the natural angular frequency of vibration.

Then under the excitation of the external dynamic load $f_1$, the output of the structure is:

$$X_1 = \frac{k - \omega^2 m_2}{|Z|} \quad (2)$$

Therefore, the mass $m_2$ of the vibration reduction element and the stiffness k of the elastic support may be properly chosen such that $k-\omega^2 m_2 \to 0$, then the vibration of the structure $x_1 \to 0$, $x_2 \neq 0$, that is, the vibration will be borne by the vibration reduction element, therebt attenuating the vibration by damping characteristics of the vibration reduction element.

Step 7, a sensor is bonded.

The sensor includes a temperature sensor and a acceleration sensor, so as to obtain the internal temperature and acceleration signals of the structure. The specific installation positions of the temperature sensor and the acceleration sensor are as shown in FIG. 17. There are 8 temperature sensors and 8 acceleration sensors, and models thereof are shown in Table 5.

Table 5 the model and number of internal sensors

| Sensor Name | Sensor Model | Number | Corresponding Number in the Figure |
|---|---|---|---|
| Temperature Sensor | MF501 | 8 | WDC01 ~ WDC08 |
| Acceleration Sensor | PCB352A21 | 8 | JSDC01 ~ JSDC08 |

The corresponding number of the temperature sensors in the figure are WDC01-WDC08. The temperature sensors numbered as WDC01, WDC03, WDC05 and WDC07 are bonded to the side wall of the outer surface of the power source modules, and the temperature sensors numbered as WDC02, WDC04, WDC06 and WDC08 are bonded to the inner cavity of the power source modules. The sensor is connected to the outside via the electrical connector. A GD414 silicon rubber is used to fix a head of the temperature sensor. The lead of the temperature sensor are extended out from the side of the power source module and are disposed at the upper surface of the power source module, and are connected to a 9-core weak electrical connector (produced by Guizhou Aerospace Electric Company and the model is J30JH) as the detection interface via C55/0114-26 wires.

The corresponding number of the acceleration sensors in the figure are JSDC01~JSDC08, and the installation positions thereof are located on the inner walls of the framework and the inner surfaces of the cover plate, wherein six acceleration sensors are disposed at the inner walls of the framework, one acceleration sensor is disposed at an inner surface of the upper cover plate and one acceleration sensor is disposed at an inner surface of lower cover plate. The specific locations of the acceleration sensors are as follows: an acceleration sensor numbered as JSDC01 is mounted on the inner wall of the border V, an acceleration sensor numbered as JSDC02 is mounted on the inner wall of the border IV, an acceleration sensor numbered as JSDC03 is mounted on the upper surface of the lower cover plate, an acceleration sensor numbered as JSDC04 is mounted on the lower surface of the upper cover plate, an acceleration sensor numbered as JSDC05 is mounted on the inner wall of the border I, an acceleration sensor numbered as JSDC06 is mounted on the inner wall of the framework VIII, an acceleration sensor numbered as JSDC07 is mounted on the inner wall of the framework IV, and an acceleration sensor numbered as JSDC08 is mounted on the inner wall of the framework VIII. In installing, on the corresponding position of the structure body, first the insulating sheet is bonded with J133 adhesive, and then the acceleration sensors are bonded to the insulating sheet via the J133 adhesive, so as to ensure that shell of the installed acceleration sensors is completely insulated from the body of the multi-functional vibration reduction structure. After installation, the leads of the acceleration sensors are connected to a 9-core electrical connector (produced by Guizhou Aerospace Electric Company and the model is J30JH) via C55/0114-26 wires.

Step 8, the upper cover plate is bonded with the elastic cushion.

The upper cover plate and the elastic cushion are bonded together also using the J133 structural adhesive to form an integrated structure.

Step 9, the upper cover plate is mounted.

The screw mounting holes are disposed at the four angular points of the framework, the center position of the framework, the rims and the keels. The upper cover plate is fastened to the framework by structural mounting screws made of titanium alloy TC-4R and corresponding flat washers and spring washers, thus forming a complete multi-functional structure for electrical energy and mechanical environmental management. The schematic diagram of the assembled framework is shown in FIG. 20.

After the upper cover plate is installed, the elastic cushion is also in the pre-compressed state, and the power source module cannot move inside the framework.

Step 10, a conductive copper foil and a grounding pile are mounted.

To make the carbon fiber surface of the entire multi-functional structure has electrical consistent in conductivity, the upper surface of the upper cover plate and the lower surface of the lower cover plate are both polished. Then, a copper frame is attached on the upper surface of the upper cover plate (as shown in FIG. 18), and a bottom copper foil is attached entirely on the bottom surface of the lower cover plate (in this embodiment, the bottom copper foil is formed by splicing a plurality of copper foils with a width of 50 mm so as to form an entire conductive surface, as shown in FIG. 19). The U-shaped copper foil is uniformly attached on the outer wall of the framework. The U-shaped copper foil is connected to the copper frame and the bottom copper foil (as shown in FIG. 20).

To effectively ground the multi-function structure, finally each of the four corners of the copper frame is connected to a grounding pile (as shown in FIG. 20), where one end of the grounding pile is connected to the ground line of the power source module and the other end of the grounding pile is connected to the system of the spacecraft.

The multi-functional structure for electrical energy and mechanical environment management according to the present invention functions as a structure with a carrying function to directly replace an original spacecraft deck, and can also function as a bearing structure in a spacecraft capsule. In this embodiment, the multi-functional structure according to the present invention directly replaces an original spacecraft deck, and a schematic diagram thereof is shown in FIG. 21.

In order to further verify the vibration reduction effect of the multi-functional structure according to the present invention, an acceleration response test is carried out under ground conditions. As shown in FIG. 17, the border of the multi-functional structure is beaten by a force hammer at a point A in the X-axis direction and a point B in the Y-axis direction respectively, and a response signal from the acceleration sensor is acquired by a test computer. Acceleration signals from the acceleration sensors 1 (JSDC01) and 5 (JSDC05) are obtained when the border is beaten in the X direction and are shown in FIG. 22. Acceleration signals from the acceleration sensors 2 (JSDC02) and 6 (JSDC06) are obtained when the border is beaten in the Y direction and are shown in FIG. 23. As can be seen from FIGS. 22 and 23, a signal peak of the acceleration sensor 1 is significantly larger than a signal peak of the acceleration sensor 5, and a signal peak of the acceleration sensor 2 is significantly larger than a signal peak of the acceleration sensor 6. Therefore, the vibrations generated by the beat are significantly attenuated after passing through the multi-functional structure.

In summary, the multi-functional structure for electrical energy and mechanical environment management according to the present invention is a structure that has the functions of bearing, vibration reduction, electrical energy storage and measurement, and the like, and the requirement of light in weight and miniaturization in volume of the structure can be realized.

## Claims

1. A multi-functional structure for electrical energy and mechanical environment management, comprising a main structure module, four rechargeable/dischargeable power source modules, a vibration reduction system and a sensor module;

   the main structure module comprises a framework (10), an upper cover plate (11) and a lower cover plate (12); wherein the framework (10) has a grid shape with four square hollow cavities, and has an omnidirectional symmetry with respect to three axes of x, y and z; the lower cover plate (12) is fixed on a bottom surface of the framework (10); the upper cover plate (11) is fixed on a top surface of the framework (10); the framework (10), the upper cover plate (11) and the lower cover plate (12) constitute a main bearing structure to have a bearing function;

   the four power source modules comprise a power source module I (20), a power source module II (21), a power source module III (22) and a power source module IV (23); wherein by means of an elastic support, the power source modules are embedded in the closed square hollow cavities formed by the framework (10), the upper cover plate (11) and the lower cover plate (12), and each of the closed square hollow cavities is provided with one of the power source modules; wherein the elastic support comprises an elastic block (30) and an elastic cushion (31); and positive and negative wires of the power source module are extended out of the framework (10) via strong electrical cables and connected to a strong electrical connector (24) disposed on an outer wall of the framework (10) so as to form a charge/discharge interface; the power source module both has a function of charging for many times and discharging for many times, and has a function of an oscillator to dissipate vibration energy;

   the elastic block (30) is disposed between a periphery of each of the power source modules and a wall of the square hollow cavity for accommodating the power source module; the elastic cushion (31) is disposed between the bottom surface of each of the power source modules and the lower cover plate (12) and between the top surface of each of the power source modules and the upper cover plate (11);

   the power source modules, the elastic block (30) and the elastic cushion (31) constitute the vibration reduction

system functioning as a 'spring-vibrator' model, wherein the elastic block (30) and the elastic cushion (31) function as the elastic support with a certain rigidity and damping, and the power source modules function as a vibrator with a certain quality; wherein a deformation of the elastic support enables the vibration reduction system to absorb vibration and consume energy, and the power source modules functioning as the vibrator convert structural vibrational energy into kinetic energy of the vibrator to consume the vibrational energy, so that a combined effect of the vibration reduction system and the power source modules reduces the transmission of the vibration in the multi-functional structure and effectively manages the mechanical environment of the power source module; and

the sensor module comprises a plurality of temperature sensors and a plurality of acceleration sensors; wherein the temperature sensors are disposed at an inner cavity and an outer sidewall of the power source module and are configured for monitoring temperature of the power source module; the acceleration sensors are disposed at an inner wall of the framework (10), an inner wall of the upper cover plate (11) and an inner wall of the lower cover plate (12) and are configured for measuring the vibration of the framework (10), the upper cover plate (11) and the lower cover plate (12), thus detecting and monitoring the internal electrical energy and vibration management of multi-functional structures.

**2.** The multi-functional structure for electrical energy and mechanical environment management according to claim 1, wherein

the framework (10) is assembled by connecting two set of square tubes, wherein the first set of square tubes comprise eight rims (10-1) located at edges of the framework (10) and the second set of square tubes comprise four keels (10-2) at the center of the framework (10);

a cross structure is formed by the four keels (10-2) through a cross joint; wherein four L-shaped structures are formed by the eight rims (10-1), with each of the four L-shaped structures being formed by each two of the eight rims through an L-shaped joint; and

a symmetrical grid-shaped framework is formed by connecting the four L-shaped structures with the cross structure through T-shaped joints.

**3.** The multi-functional structure for electrical energy and mechanical environment management according to claim 2, wherein

each of the keels (10-2) and the rims (10-1) is formed by laying-up a carbon fiber composite material, and a layup pattern is $[\pm45/0/\pm45]_{2S}$;

the cross joint, the L-shaped joint and the T-shaped joint are made of titanium alloy material of high specific strength and low thermal expansion coefficient; and the corresponding joint is bonded to each of the framework (10-1) and keel (10-2) by adhesive.

**4.** The multi-functional structure for electrical energy and mechanical environment management according to claim 2, wherein

an L-shaped angular piece (10-3) is also bonded at each of corners of the framework (10) using a structural adhesive, the angular piece (10-3) is made of polyimide insulating material, is used to reinforce assembly and connection of the framework (10) and have an insulation function; and

an insulating sheet (10-4) is bonded to mounting position of the acceleration sensor, wherein the insulating sheet (10-4) is made of the polyimide insulating material, to insulate the acceleration sensor from the main structure module.

**5.** The multi-functional structure for electrical energy and mechanical environment management according to claim 1, wherein

each of the upper cover plate (11) and the lower cover plate (12) is a sandwich structure;

the sandwich structure comprises: from top to bottom, a upper skin (11-1), a sandwiched plate (11-2) and a lower skin (11-3), wherein the upper skin (11-1) and the sandwiched plate (11-2) are connected by an adhesive, and a thickness of the thereby formed adhesive layer is controlled to be within a range of 0.1 mm to 0.2 mm;

the lower skin (11-3) and the sandwiched plate (11-2) are connected by an adhesive, and the thickness of the thereby formed adhesive layer is controlled to be within a range of 0.1 mm-0.2mm;

wherein, the sandwiched plate (11-2) is in a form of a rib mesh, each of the upper skin (11-1) and the lower skin (11-3) is in a form of a panel, and the upper skin (11-1) and the lower skin (11-3) are identical in structures

and materials; and
wherein each of the upper skin (11-1), the sandwiched plate (11-2) and the lower skin (11-3) is made of carbon fiber composite material, and a layup pattern of the upper skin (11-1) and the lower skin (11-3) is $[0/\pm45/90/\pm45]_S$; and a layup pattern of the sandwiched plate (11-2) is $[0/\pm45/90/0]_{2S}$.

**6.** The multi-functional structure for electrical energy and mechanical environment management according to claim 1, wherein

the upper cover plate (11) and the lower cover plate (12) are provided with a plurality of circular exhaust holes disposed in a regular arrangement, and the circular exhaust holes are configured to exhaust gas inside the multi-functional structure in a technical process and gas inside the multi-functional structure in a vacuum environment; and
the lower cover plate (12) is fixed on the bottom surface of the framework (10) by gluing; the upper cover plate (11) is screwed to the top surface of the framework (10) by screws through thread connection, and screw mounting holes are located at four angular points of the framework (10), a center position of the framework (10), the rims and the keels of the framework (10); the screw is made of a titanium alloy material with a small thermal expansion coefficient, which is suitable for large temperature changes and dramatic changes in a working environment.

**7.** The multi-functional structure for electrical energy and mechanical environment management according to claim 1, wherein
the elastic block (30) and the elastic cushion (31) is a made of high molecular elastic vinyl-terminated polydimethylsiloxane material, the chemical formula of the material is:

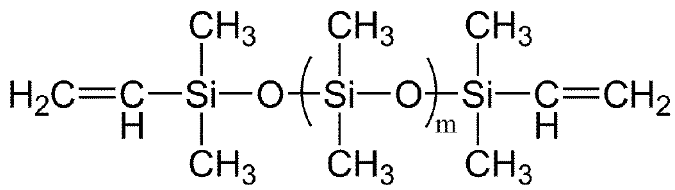

each of the elastic block (30) and the elastic cushion (31) both has a function of supporting the power source module, and has a function of dissipating a part of the vibration energy by the elastic deformation thereof, thereby having a function of protecting the power source module, and a function of insulating the power source module from the main structure module and cooling the power source module.

**8.** The multi-functional structure for electrical energy and mechanical environment management according to claim 1, wherein

the elastic block (30) and the elastic cushion (31) are installed in a pre-compressed manner, to achieve an elastic constraint support on the power source module by producing an elastic force based on pre-compression; the elastic block (30) is in a rectangular shape and both ends of the elastic block (30) are in surface contact with an inner side surface of the framework (10) and an outer side surface of the power source module without a fixed connection; the elastic cushion (31) is in a well shape, one surface of the elastic cushion is adhered to a lower surface of the upper cover plate (11) and an upper surface of the lower cover plate (12) by adhesive, and the other surface thereof is only in surface contact with the surface of the power source module without a fixed connection, and
each of the elastic block (30) and the elastic cushion (31) is in a pre-compressed state after the installation.

**9.** The multi-functional structure for electrical energy and mechanical environment management according to claim 1, wherein
a position limiting block (32) is adhered at a boundary between the inner wall of the framework (10) and each of the ends of both sides of each of the elastic blocks (30) by structural adhesive, and the position limiting block (32) is configured for limiting the position of the elastic block (30), to avoid a movement and a displacement of the elastic block (30).

**10.** The multi-functional structure for electrical energy and mechanical environment management according to any one of claims 1 to 9, wherein

the power source module is a lithium battery; and/or
a plurality of voltage detection lines are extended out from the power source module, and welded to an electrical connector (33) mounted on the outer wall of the framework (10), to form a detection interface for detecting a graded voltage signal of each of the power source modules; and/or
each of an upper surface of the upper cover plate (11) and a lower surface of the lower cover plate (12) is polished to make the surface of carbon fiber of the entire multi-functional structure consistent in conductivity;
a copper frame (50) is attached on the upper surface of the upper cover plate (11); a bottom copper foil (51) is attached on the entire surface of the bottom surface of the lower cover plate (12), wherein the bottom copper foil (51) is formed by splicing a plurality of copper foils of a certain width so as to form a whole conductive surface;
a U-shaped copper foil (52) is uniformly attached on the outer wall of the framework (10), wherein the U-shaped copper foil (52) is connected with the copper frame (50) located on the upper cover plate (11) and the bottom copper foil (51) located on the lower cover plate (12), to make the multi-functional structure for electrical energy and mechanical environment management consistent in conductivity as a whole; and
each of four corners of the copper frame (50) is mounted with a grounding pile (53), wherein one end of the grounding pile (53) is connected to a ground line of the power source module and the other end of the grounding pile (53) is connected to external ground, so that the multi-functional structure is effectively grounded as a whole through the grounding pile (53).

## Patentansprüche

1. Multifunktionsstruktur für eine Verwaltung von elektrischer Energie und mechanischer Umgebung, welches ein Hauptstrukturmodul, vier wiederaufladbare / entladbare Stromquellenmodule, ein Schwingungsverminderungssystem und ein Sensormodul aufweist;

   wobei das Hauptstrukturmodul einen Rahmen (10), eine obere Abdeckplatte (11) und eine untere Abdeckplatte (12) aufweist; wobei das Rahmen (10) eine Gitterform mit vier quadratischen Hohlräumen aufweist und es eine omnidirektionale Symmetrie in Bezug auf drei Achsen von x, y und z aufweist; wobei die untere Abdeckplatte (12) an einer unteren Oberfläche des Rahmens (10) befestigt ist; wobei die obere Abdeckplatte (11) an einer oberen Oberfläche des Rahmens (10) befestigt ist; wobei der Rahmen (10), die obere Abdeckplatte (11) und die untere Abdeckplatte (12) eine Hauptlagerstruktur bilden, um eine Lagerfunktion zu haben;
   wobei die vier Stromquellenmodule ein Stromquellenmodul I (20), ein Stromquellenmodul II (21), ein Stromquellenmodul III (22) und ein Stromquellenmodul IV (23) umfassen; wobei mittels eines elastischen Trägers die Stromquellenmodule in die Hohlräume eingebettet sind, die durch den Rahmen (10), die obere Abdeckplatte (11) und die untere Abdeckplatte (12) gebildet werden, und jedes der geschlossenen quadratischen Hohlräume mit einem der Stromquellenmodule versehen ist; wobei der elastische Träger einen elastischen Block (30) und ein elastisches Kissen (31) aufweist; und wobei positive und negative Drähte des Stromquellenmoduls über starke elektrische Kabel aus dem Rahmen (10) herausgeführt werden und mit einem starken elektrischen Verbinder (24) verbunden sind, der an einer äußeren Wand des Rahmens (10) angeordnet ist, um eine Lade- / Entladeschnittstelle zu bilden; wobei das Stromquellenmodul sowohl die Funktion des mehrmaligen Ladens als auch des mehrmaligen Entladens und auch die Funktion eines Oszillators zum Ableiten von Schwingungsenergie hat,
   wobei der elastische Block (30) zwischen einem Umfang von jedem der Stromquellenmodule und einer Wand des quadratischen Hohlraums zur Aufnahme des Stromquellenmoduls angeordnet ist; wobei das elastische Kissen (31) zwischen der unteren Oberfläche von jedem der Stromquellenmodule und der unteren Abdeckplatte (12) und zwischen der oberen Oberfläche von jedem der Stromquellenmodule und der oberen Abdeckplatte (11) angeordnet ist;
   wobei die Stromquellenmodule, der elastische Block (30) und das elastische Kissen (31) das Schwingungsverminderungssystem bilden, das als ein "Feder-Vibrator"-Modell wirkt, wobei der elastische Block (30) und das elastische Kissen (31) als die elastische Unterstützung mit einer bestimmten Steifheit und einer bestimmten Dämpfung wirken, und die Stromquellenmodule als ein Vibrator mit einer bestimmten Qualität wirken; wobei eine Verformung des elastischen Trägers es dem Schwingungsverminderungssystem ermöglicht, Schwingungen zu absorbieren und Energie zu verbrauchen, und wobei die Stromquellenmodule, die als der Vibrator wirken, strukturelle Schwingungsenergie in kinetische Energie des Vibrators umwandeln, um die Schwingungsenergie zu verbrauchen, so dass eine kombinierte Wirkung des Schwingungsverminderungssystems und der Stromquellenmodule die Übertragung der Schwingung in der multifunktionalen Struktur verringert und effektiv die mechanische Umgebung des Stromquellenmoduls verwaltet; und
   wobei das Sensormodul eine Vielzahl an Temperatursensoren und eine Vielzahl an Beschleunigungssensoren

aufweist; wobei die Temperatursensoren an einem inneren Hohlraum und einer äußeren Seitenwand des Stromquellenmoduls angeordnet sind und zum Überwachen der Temperatur des Stromquellenmoduls ausgestaltet sind; wobei die Beschleunigungssensoren an einer inneren Wand des Rahmens (10), einer inneren Wand der oberen Abdeckplatte (11) und einer inneren Wand der unteren Abdeckplatte (12) angeordnet sind und zur Messung der Schwingung des Rahmens (10), der oberen Abdeckplatte (11) und der unteren Abdeckplatte (12) ausgestaltet sind, und somit die Verwaltung der internen elektrischen Energie und der Schwingungen der multifunktionalen Strukturen erfassen und überwachen.

**2.** Multifunktionsstruktur für die Verwaltung von elektrischer Energie und mechanischer Umgebung nach Anspruch 1, wobei

der Rahmen (10) durch ein Verbinden von zwei Sätzen an Vierkantrohren zusammengebaut wird, wobei der erste Satz der Vierkantrohre acht Ränder (10-1), die an den Rändern des Rahmens (10) angeordnet sind, und der zweite Satz der Vierkantrohre vier Kiele (10-2) aufweist, die in der Mitte des Rahmens (10) angeordnet sind; wobei
eine Kreuzstruktur durch die vier Kiele (10-2) durch eine Kreuzverbindung gebildet worden ist; wobei
vier L-förmige Strukturen durch die acht Ränder (10-1) gebildet worden sind, wobei jede der vier L-förmigen Strukturen durch jeweils zwei der acht Ränder durch eine L-förmige Verbindung gebildet worden ist; und wobei
ein symmetrischer gitterförmiger Rahmen gebildet worden ist, indem die vier L-förmigen Strukturen durch die T-förmigen Verbindungen mit der Kreuzstruktur verbunden worden sind.

**3.** Multifunktionsstruktur für die Verwaltung von elektrischer Energie und mechanischer Umgebung nach Anspruch 2, wobei

jeder der Kiele (10-2) und der Ränder (10-1) durch ein Anlegen eines Kohlefaserverbundmaterials gebildet worden ist, und ein Anlegemuster $[\pm 45/0/\pm 45]_{2S}$ ist; wobei
die Kreuzverbindung, die L-förmige Verbindung und die T-förmige Verbindung aus einem Titanlegierungsmaterial mit einer hohen spezifischer Festigkeit und einem geringen Wärmeausdehnungskoeffizienten bestehen; und die entsprechende Verbindung mit jedem von dem Rahmen (10-1) und dem Kiel (10-2) mit einem Klebstoff verbunden ist.

**4.** Multifunktionsstruktur für die Verwaltung von elektrischer Energie und mechanischer Umgebung nach Anspruch 2, wobei

ein L-förmiges Winkelstück (10-3) ebenfalls an jeder der Ecken des Rahmens (10) unter Verwendung eines strukturellen Klebstoffs befestigt worden ist, das Winkelstück (10-3) aus einem Polyimid-Isoliermaterial besteht und es zur Verstärkung des Zusammenbaus verwendet wird und eine Verbindung des Rahmens (10) eine Isolationsfunktion aufweist; und wobei
eine Isolierschicht (10-4) mit der Montageposition des Beschleunigungssensors verbunden ist, wobei die Isolierschicht (10-4) aus dem Polyimid-Isoliermaterial hergestellt worden ist, um den Beschleunigungssensor von dem Hauptstrukturmodul zu isolieren.

**5.** Multifunktionsstruktur für die Verwaltung von elektrischer Energie und mechanischer Umgebung nach Anspruch 1, wobei

die obere Abdeckplatte (11) und die untere Abdeckplatte (12) jeweils eine Sandwichstruktur sind; wobei
die Sandwichstruktur von oben nach unten aufweist: eine obere Haut (11-1), eine sandwichartig angeordnete Platte (11-2) und eine untere Haut (11-3), wobei die obere Haut (11-1) und die sandwichartig angeordnete Platte (11-2) durch einen Klebstoff verbunden sind und eine Dicke der dadurch gebildeten Klebstoffschicht auf eine solche Weise gesteuert ist, dass sie in einem Bereich von 0,1 mm bis 0,2 mm liegt; wobei die untere Haut (11-3) und die sandwichartig angeordnete Platte (11-2) durch einen Klebstoff verbunden sind, und die Dicke der dadurch gebildeten Klebstoffschicht eine solche Weise gesteuert ist, dass sie in einem Bereich von 0,1 mm bis 0,2 mm liegt; wobei
die sandwichartig angeordnete Platte (11-2) die Form eines Rippennetzes hat, die obere Haut (11-1) und die untere Haut (11-3) jeweils die Form einer Platte haben und die obere Haut (11-1) und die untere Haut (11-3) in Struktur und Material identisch sind; und wobei
die obere Haut (11-1), die sandwichartig angeordnete Platte (11-2) und die untere Haut (11-3) jeweils aus einem Kohlefaserverbundmaterial hergestellt worden sind und ein Anlegemuster der oberen Haut (11-1) und der

unteren Haut (11-3) [0/±45/90/±45]s ist; und ein Anlegemuster der sandwichartig angeordneten Platte (11-2) $[0/\pm45/90/0]_{2S}$ ist.

6. Multifunktionsstruktur für die Verwaltung von elektrischer Energie und mechanischer Umgebung nach Anspruch 1, wobei

die obere Abdeckplatte (11) und die untere Abdeckplatte (12) mit einer Vielzahl an kreisförmigen Auslasslöchern versehen sind, die in einer regelmäßigen Anordnung angeordnet sind, und die kreisförmigen Auslasslöcher ausgestaltet sind, um das Gas innerhalb der multifunktionalen Struktur in einem technischen Verfahren und das Gas innerhalb der multifunktionalen Struktur in einer Vakuumumgebung auszulassen; und wobei
die untere Abdeckplatte (12) durch ein Kleben an der unteren Oberfläche des Rahmens (10) befestigt worden ist; wobei die obere Abdeckplatte (11) an der oberen Oberfläche des Rahmens (10) durch eine Gewindeverbindung angeschraubt worden ist, und die Schraubenbefestigungslöcher sich an vier Winkelpunkten des Rahmens (10) befinden, einer mittleren Position des Rahmens (10)), der Ränder und der Kiele des Rahmens (10); wobei die Schraube aus einem Titanlegierungsmaterial mit einem kleinen Wärmeausdehnungskoeffizienten besteht, das für große Temperaturänderungen und dramatische Änderungen in einer Arbeitsumgebung geeignet ist.

7. Multifunktionsstruktur für die Verwaltung von elektrischer Energie und mechanischer Umgebung nach Anspruch 1, wobei
der elastische Block (30) und das elastische Kissen (31) aus einem hochmolekularen elastischen Polydimethylsiloxanmaterial mit einem endständigen Vinyl hergestellt worden sind, dessen chemische Formel lautet:

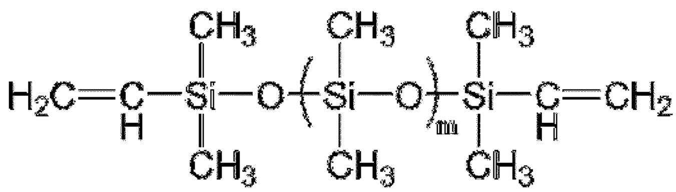

wobei sowohl der elastische Block (30) als auch das elastische Kissen (31) eine Funktion aufweisen, das Stromquellenmodul zu stützen, und sie eine Funktion aufweisen, einen Teil der Schwingungsenergie durch ihre elastische Verformung abzuleiten, wodurch sie eine Funktion aufweisen, das Stromquellenmodul zu schützen, und sie eine Funktion aufweisen, das Stromquellenmodul von dem Hauptstrukturmodul zu isolieren und das Stromquellenmodul zu kühlen.

8. Multifunktionsstruktur für die Verwaltung von elektrischer Energie und mechanischer Umgebung nach Anspruch 1, wobei

der elastische Block (30) und das elastische Kissen (31) auf eine vorkomprimierte Weise angebracht worden sind, um eine elastische Beschränkungsunterstützung für das Stromquellenmodul durch ein Erzeugen einer elastischen Kraft auf der Grundlage einer vorkomprimierten Kraft zu erzielen; wobei der elastische Block (30) eine rechteckige Form aufweist und beide Enden des elastischen Blocks (30) in einem Oberflächenkontakt mit einer inneren seitlichen Oberfläche des Rahmens (10) und mit einer äußeren seitlichen Oberfläche des Stromquellenmoduls ohne eine feste Verbindung stehen; wobei das elastische Kissen (31) sich in einer guten Form befindet, eine Oberfläche des elastischen Kissens an einer unteren Oberfläche der oberen Abdeckplatte (11) und einer oberen Oberfläche der unteren Abdeckplatte (12) durch einen Klebstoff angeklebt worden ist, und die andere Oberfläche davon nur in einem flächigem Kontakt mit der Oberfläche des Stromquellenmoduls ohne eine feste Verbindung steht, und wobei
sowohl der elastische Block (30) als auch das elastische Kissen (31) sich nach dem Einbau in einem vorkomprimierten Zustand befinden.

9. Multifunktionsstruktur für die Verwaltung von elektrischer Energie und mechanischer Umgebung nach Anspruch 1, wobei
ein Positionsbegrenzungsblock (32) an einer Grenze zwischen der inneren Wand des Rahmens (10) und jedem der Enden beider Seiten jedes der elastischen Blöcke (30) durch einen Strukturklebstoff verklebt worden ist, und der Positionsbegrenzungsblock (32) ausgestaltet, um die Position des elastischen Blocks (30) zu begrenzen, um eine Bewegung und eine Verschiebung des elastischen Blocks (30) zu vermeiden.

10. Multifunktionsstruktur für die Verwaltung von elektrischer Energie und mechanischer Umgebung nach einem der Ansprüche 1 bis 9, wobei

das Stromquellenmodul eine Lithiumbatterie ist und / oder wobei
eine Vielzahl an Spannungserfassungsleitungen sich aus dem Stromquellenmodul heraus erstrecken und mit einem elektrischen Verbinder (33) verschweißt worden sind, der an der äußeren Wand des Rahmens (10) angebracht worden ist, um eine Erfassungsschnittstelle zum Erfassen eines abgestuften Spannungssignals von jedem von beiden der Stromquellenmodule zu bilden; und / oder wobei
die obere Oberfläche der oberen Abdeckplatte (11) und die untere Oberfläche der unteren Abdeckplatte (12) jeweils poliert worden sind, um die Oberfläche der Kohlenstofffaser der gesamten multifunktionalen Struktur in Bezug auf die Leitfähigkeit gleichbleibend zu machen; wobei
ein Kupferrahmen (50) an der oberen Oberfläche der oberen Abdeckplatte (11) angebracht worden ist; eine untere Kupferfolie (51) auf der gesamten Oberfläche der unteren Oberfläche der unteren Abdeckplatte (12) angebracht worden ist, wobei die untere Kupferfolie (51) durch ein Spleißen einer Vielzahl an Kupferfolien einer bestimmten Breite gebildet worden ist, um eine vollständig leitende Oberfläche zu bilden; wobei
eine U-förmige Kupferfolie (52) an der äußeren Wand des Rahmens (10) gleichmäßig angebracht worden ist, wobei die U-förmige Kupferfolie (52) mit dem Kupferrahmen (50), der sich auf der oberen Abdeckplatte (11) befindet, und der unteren Kupferfolie (51), die sich auf der unteren Abdeckplatte (12) befindet, verbunden worden ist, um die multifunktionale Struktur für das Management der elektrischen Energie und der mechanischen Umgebung in Bezug auf die Leitfähigkeit als Ganzes konsistent zu machen; und wobei
an jeder an der vier Ecken des Kupferrahmens (50) ein Erdungsstift (53) angebracht worden ist, wobei ein Ende des Erdungsstifts (53) mit einer Erdungsleitung des Stromquellenmoduls und das andere Ende des Erdungsstifts (53) mit der Außenmasse verbunden worden ist, so dass die Multifunktionsstruktur als ein Ganzes durch den Erdungsstift (53) wirksam geerdet wird.

## Revendications

1. Structure multifonctionnelle pour gestion d'énergie électrique et d'environnement mécanique, comprenant un module de structure principale, quatre modules de source d'alimentation rechargeables/déchargeables, un système de réduction de vibration et un module de capteur ;
le module de structure principale comprend une ossature (10), une plaque de recouvrement supérieure (11) et une plaque de recouvrement inférieure (12) ; dans laquelle l'ossature (10) a une forme de grille avec quatre cavités creuses carrées, et a une symétrie omnidirectionnelle par rapport aux trois axes x, y et z ; la plaque de recouvrement inférieure (12) est fixée sur une surface basse de l'ossature (10) ; la plaque de recouvrement supérieure (11) est fixée sur une surface haute de l'ossature (10) ; l'ossature (10), la plaque de recouvrement supérieure (11) et la plaque de recouvrement inférieure (12) constituent une structure d'appui principale pour avoir une fonction d'appui ;
les quatre modules de source d'alimentation comprennent un module de source d'alimentation I (20), un module de source d'alimentation II (21), un module de source d'alimentation III (22) et un module de source d'alimentation IV (23) ; dans laquelle au moyen d'un support élastique, les modules de source d'alimentation sont noyés dans les cavités creuses carrées fermées formées par l'ossature (10), la plaque de recouvrement supérieure (11) et la plaque de recouvrement inférieure (12), et chacune des cavités creuses carrées fermées est pourvue de l'un des modules de source d'alimentation ; dans laquelle le support élastique comprend un bloc élastique (30) et un coussin élastique (31) ; et des fils positif et négatif du module de source d'alimentation se prolongent hors de l'ossature (10) via des câbles électriques solides et connectés à un connecteur électrique solide (24) disposé sur une paroi externe de l'ossature (10) de manière à former une interface de charge/décharge ; le module de source d'alimentation a à la fois une fonction de charge pour de nombreuses fois et de décharge pour de nombreuses fois, et a une fonction d'oscillateur pour dissiper l'énergie de vibration ;
le bloc élastique (30) est disposé entre une périphérie de chacun des modules de source d'alimentation et une paroi de la cavité creuse carrée pour accueillir le module de source d'alimentation ; le coussin élastique (31) est disposé entre la surface basse de chacun des modules de source d'alimentation et la plaque de recouvrement inférieure (12) et entre la surface haute de chacun des modules de source d'alimentation et la plaque de recouvrement supérieure (11) ;
les modules de source d'alimentation, le bloc élastique (30) et le coussin élastique (31) constituent le système de réduction de vibration fonctionnant comme un modèle de « ressort-vibrateur », dans laquelle le bloc élastique (30) et le coussin élastique (31) fonctionnent comme le support élastique avec une certaine rigidité et un certain amortissement, et les modules de source d'alimentation fonctionnent comme un vibrateur avec une certaine qualité ; dans laquelle une déformation du support élastique permet au système de réduction de vibration d'absorber la

vibration et de consommer de l'énergie, et les modules de source d'alimentation fonctionnant comme le vibrateur convertissent de l'énergie vibratoire structurelle en énergie cinétique du vibrateur pour consommer l'énergie vibratoire, de sorte qu'un effet combiné du système de réduction de vibration et des modules de source d'alimentation réduit la transmission de la vibration dans la structure multifonctionnelle et gère efficacement l'environnement mécanique du module de source d'alimentation ; et
le module de capteur comprend une pluralité de capteurs de température et une pluralité de capteurs d'accélération ; dans laquelle les capteurs de température sont disposés au niveau d'une cavité interne et d'une paroi latérale externe du module de source d'alimentation et sont configurés pour surveiller la température du module de source d'alimentation ; les capteurs d'accélération sont disposés au niveau d'une paroi interne de l'ossature (10), une paroi interne de la plaque de recouvrement supérieure (11) et une paroi interne de la plaque de recouvrement inférieure (12) et sont configurés pour mesurer la vibration de l'ossature (10), la plaque de recouvrement supérieure (11) et la plaque de recouvrement inférieure (12), détectant et surveillant ainsi la gestion d'énergie électrique interne et de vibration de structures multifonctionnelles.

**2.** Structure multifonctionnelle pour gestion d'énergie électrique et d'environnement mécanique selon la revendication 1, dans laquelle
l'ossature (10) est assemblée en connectant deux jeux de tubes carrés, dans laquelle le premier jeu de tubes carrés comprend huit rebords (10-1) situés aux bords de l'ossature (10) et le second jeu de tubes carrés comprend quatre poutres (10-2) au centre de l'ossature (10) ;
une structure de croix est formée par les quatre poutres (10-2) par l'intermédiaire d'un joint en croix ; dans laquelle quatre structures en forme de L sont formées par les huit rebords (10-1), chacune des quatre structures en forme de L étant formée par chaque ensemble de deux des huit rebords par l'intermédiaire d'un joint en forme de L ; et une ossature en forme de grille symétrique est formée en connectant les quatre structures en forme de L avec la structure en croix par le biais de joints en forme de T.

**3.** Structure multifonctionnelle pour gestion d'énergie électrique et d'environnement mécanique selon la revendication 2, dans laquelle
chacun(e) des poutres (10-2) et des rebords (10-1) est formé(e) en empilant un matériau composite à fibres de carbone, et un motif d'empilage est $[\pm 45/0/\pm 45]_{2S}$ ;
le joint en croix, le joint en forme de L et le joint en forme de T sont constitués d'un matériau alliage de titane de haute résistance spécifique et de bas coefficient de dilatation thermique ; et le joint correspondant est lié à chacune de l'ossature (10-1) et de la poutre (10-2) par adhésif.

**4.** Structure multifonctionnelle pour gestion d'énergie électrique et d'environnement mécanique selon la revendication 2, dans laquelle
une pièce angulaire en forme de L (10-3) est également liée au niveau de chacun des coins de l'ossature (10) à l'aide d'un adhésif structurel, la pièce angulaire (10-3) est constituée d'un matériau isolant polyimide, est utilisée pour renforcer l'assemblage et la connexion de l'ossature (10) et avoir une fonction d'isolation ; et
une feuille isolante (10-4) est liée à une position de montage du capteur d'accélération, dans laquelle la feuille isolante (10-4) est constituée du matériau isolant polyimide, pour isoler le capteur d'accélération du module de structure principale.

**5.** Structure multifonctionnelle pour gestion d'énergie électrique et d'environnement mécanique selon la revendication 1, dans laquelle
chacune de la plaque de recouvrement supérieure (11) et de la plaque de recouvrement inférieure (12) est une structure en sandwich ;
la structure en sandwich comprend : de haut en bas, une peau supérieure (11-1), une plaque prise en sandwich (11-2) et une peau inférieure (11-3), dans laquelle la peau supérieure (11-1) et la plaque en sandwich (11-2) sont connectées par un adhésif, et une épaisseur de la couche adhésive ainsi formée est régulée pour être dans une plage de 0, 1 mm à 0,2 mm ; la peau inférieure (11-3) et la plaque prise en sandwich (11-2) sont connectées par un adhésif, et l'épaisseur de la couche adhésive ainsi formée est régulée pour être dans une plage de 0,1 mm à 0,2 mm ;
dans laquelle, la plaque prise en sandwich (11-2) est sous la forme d'une maille à nervures, chacune de la peau supérieure (11-1) et de la peau inférieure (11-3) est sous la forme d'un panneau, et la peau supérieure (11-1) et la peau inférieure (11-3) sont de structures et matériaux identiques ; et
dans laquelle chacune de la peau supérieure (11-1), de la plaque prise en sandwich (11-2) et de la peau inférieure (11-3) est constituée de matériau composite à fibres de carbone, et un motif d'empilage de la peau supérieure (11-1) et de la peau inférieure (11-3) est de $[0/\pm 45/90/\pm 45]s$ ; et un motif d'empilage de la plaque prise en sandwich (11-2)

est de $[0/+45/90/0]_{2S}$.

6. Structure multifonctionnelle pour gestion d'énergie électrique et d'environnement mécanique selon la revendication 1, dans laquelle
la plaque de recouvrement supérieure (11) et la plaque de recouvrement inférieure (12) sont pourvues d'une pluralité de trous d'échappement circulaires disposés selon un agencement régulier, et les trous d'échappement circulaires sont configurés pour faire échapper le gaz à l'intérieur de la structure multifonctionnelle dans un processus technique et le gaz à l'intérieur de la structure multifonctionnelle dans un environnement de vide ; et
la plaque de recouvrement inférieure (12) est fixée sur la surface basse de l'ossature (10) par collage ; la plaque de recouvrement supérieure (11) est vissée sur la surface haute de l'ossature (10) par des vis par le biais d'une connexion par filets, et des trous de montage à vis sont situés aux quatre points angulaires de l'ossature (10), d'une position centrale de l'ossature (10), des rebords et des poutres de l'ossature (10) ; la vis est constituée d'un matériau alliage de titane avec un petit coefficient de dilatation thermique, qui convient aux grands changements de température et à des changements énormes dans un environnement de travail.

7. Structure multifonctionnelle pour gestion d'énergie électrique et d'environnement mécanique selon la revendication 1, dans laquelle
le bloc élastique (30) et le coussin élastique (31) sont constitués d'un matériau polydiméthylsiloxane à terminaison vinyle élastique de haute masse moléculaire, la formule chimique du matériau est :

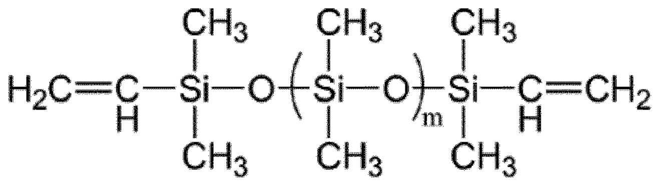

chacun du bloc élastique (30) et du coussin élastique (31) possède à la fois une fonction de support du module de source d'alimentation, et a une fonction de dissipation d'une partie de l'énergie de vibration par sa déformation élastique, ayant ainsi une fonction de protection du module de source d'alimentation, et une fonction d'isolation du module de source d'alimentation vis-à-vis du module de structure principale et de refroidissement du module de source d'alimentation.

8. Structure multifonctionnelle pour gestion d'énergie électrique et d'environnement mécanique selon la revendication 1, dans laquelle
le bloc élastique (30) et le coussin élastique (31) sont installés de manière pré-comprimée, pour accomplir un support de contrainte élastique sur le module de source d'alimentation en produisant une force élastique basée sur une pré-compression ; le bloc élastique (30) est sous forme rectangulaire et les deux extrémités du bloc élastique (30) sont en contact de surface avec une surface côté interne de l'ossature (10) et une surface côté externe du module de source d'alimentation sans connexion fixe ;
le coussin élastique (31) est sous forme de puits, une surface du coussin élastique est mis à adhérer à une surface inférieure de la plaque de recouvrement supérieure (11) et une surface supérieure de la plaque de recouvrement inférieure (12) par adhésif, et son autre surface n'est en contact de surface qu'avec la surface du module de source d'alimentation sans connexion fixe, et
chacun du bloc élastique (30) et du coussin élastique (31) est dans un état pré-comprimé après l'installation.

9. Structure multifonctionnelle pour gestion d'énergie électrique et d'environnement mécanique selon la revendication 1, dans laquelle
un bloc de limitation de position (32) est mis à adhérer à une frontière entre la paroi interne de l'ossature (10) et chacune des extrémités des deux côtés de chacun des blocs élastiques (30) par un adhésif structurel, et le bloc de limitation de position (32) est configuré pour limiter la position du bloc élastique (30), pour éviter un mouvement et un déplacement du bloc élastique (30).

10. Structure multifonctionnelle pour gestion d'énergie électrique et d'environnement mécanique selon l'une quelconque des revendications 1 à 9, dans laquelle
le module de source d'alimentation est une batterie au lithium ; et/ou
une pluralité de lignes de détection de tension se prolongent hors du module de source d'alimentation, et sont soudées à un connecteur électrique (33) monté sur la paroi externe de l'ossature (10), pour former une interface

de détection destinée à détecter un signal de tension gradué de chacun des modules de source d'alimentation ; et/ou chacune d'une surface supérieure de la plaque de recouvrement supérieure (11) et d'une surface inférieure de la plaque de recouvrement inférieure (12) est polie pour rendre cohérente en conductivité la surface de fibres de carbone de la structure multifonctionnelle entière ;

un cadre de cuivre (50) est fixé sur la surface supérieure de la plaque de recouvrement supérieure (11) ; une feuille de cuivre basse (51) est fixée sur la surface entière de la surface basse de la plaque de recouvrement inférieure (12), dans laquelle la feuille de cuivre basse (51) est formée par épissage d'une pluralité de feuilles de cuivre d'une certaine largeur de manière à former une surface conductrice entière ;

une feuille de cuivre en forme de U (52) est fixée uniformément sur la paroi externe de l'ossature (10), dans laquelle la feuille de cuivre en forme de U (52) est connectée avec le cadre de cuivre (50) situé sur la plaque de recouvrement supérieure (11) et la feuille de cuivre basse (51) située sur la plaque de recouvrement inférieure (12), pour rendre globalement cohérente en conductivité la structure multifonctionnelle pour gestion d'énergie électrique et d'environnement mécanique ; et

chacun des quatre coins du cadre de cuivre (50) est monté avec une pile de mise à la terre (53), dans laquelle une extrémité de la pile de mise à la terre (53) est connectée à une ligne de terre du module de source d'alimentation et l'autre extrémité de la pile de mise à la terre (53) est connectée à la terre externe, de sorte que la structure multifonctionnelle soit efficacement mise à la terre globalement par le biais de la pile de mise à la terre (53) .

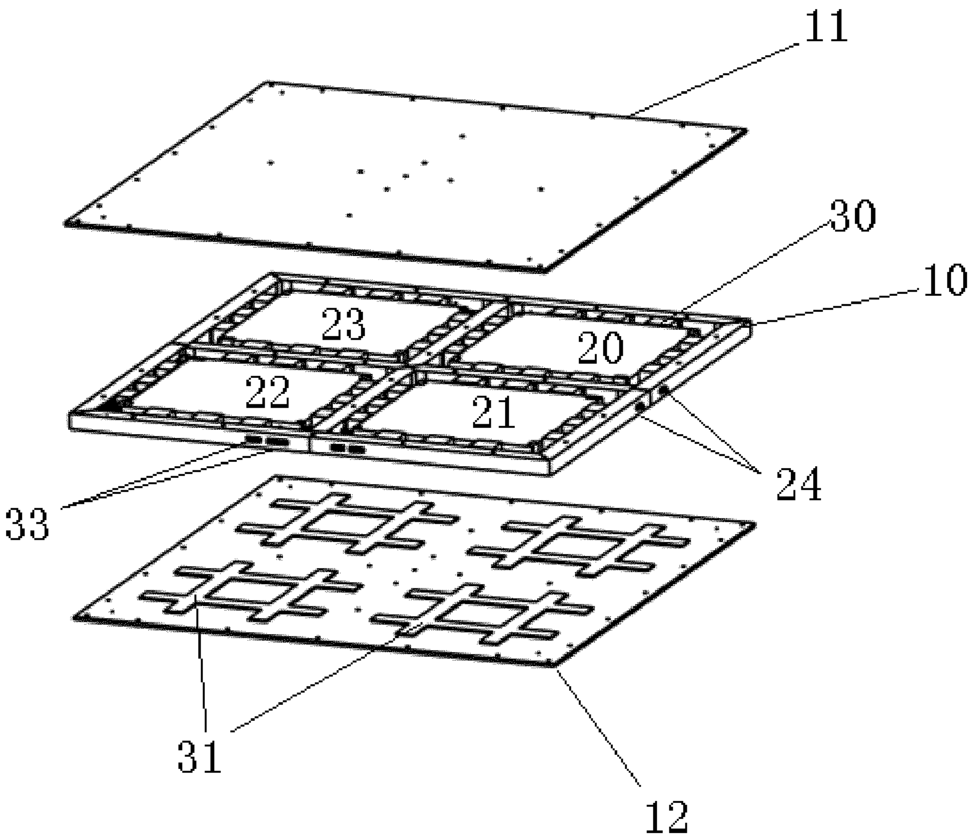


FIG. 1

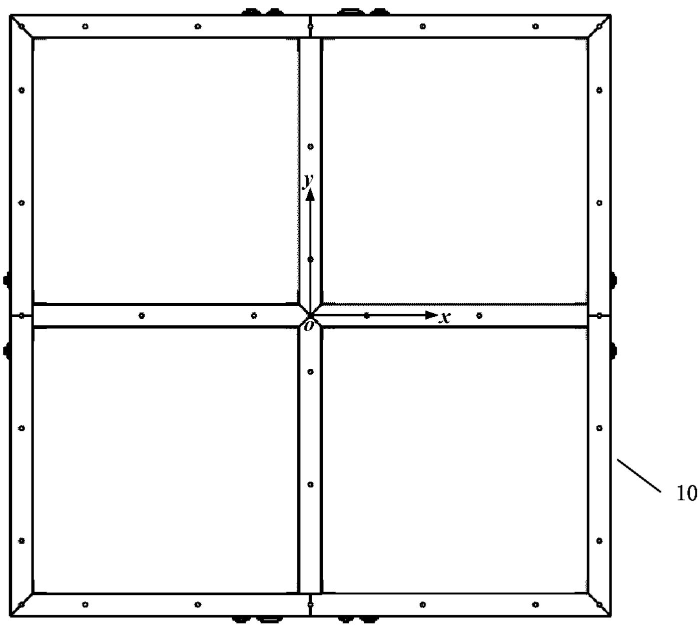


FIG. 2

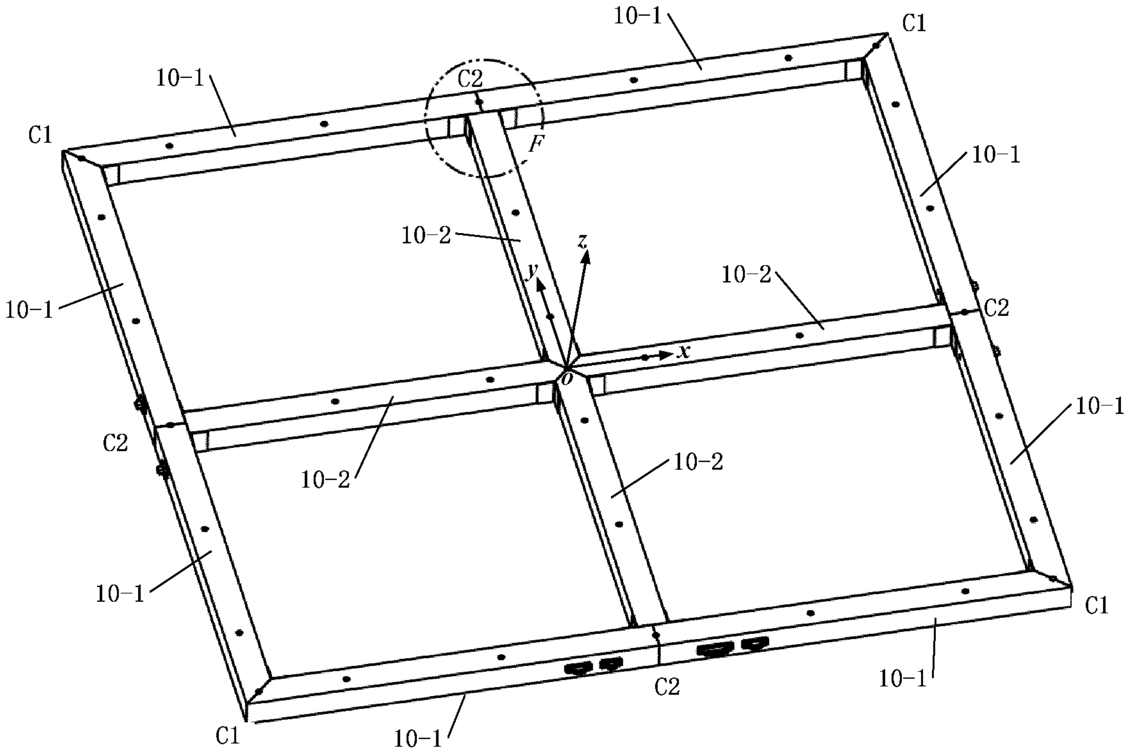
10-1
C1
10-1
C2
C1
F
10-1
10-2
z
y
10-2
C2
10-1
x
o
10-1
C2
10-2
10-2
10-2
10-1
C1
C2
10-1
C1
10-1

FIG. 3

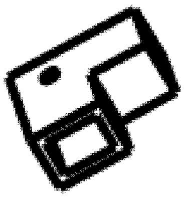

FIG. 4

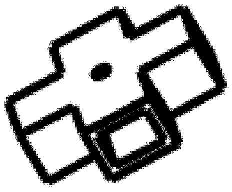

FIG. 5

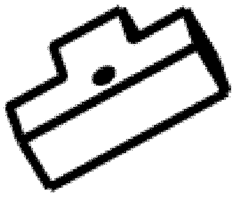

FIG. 6

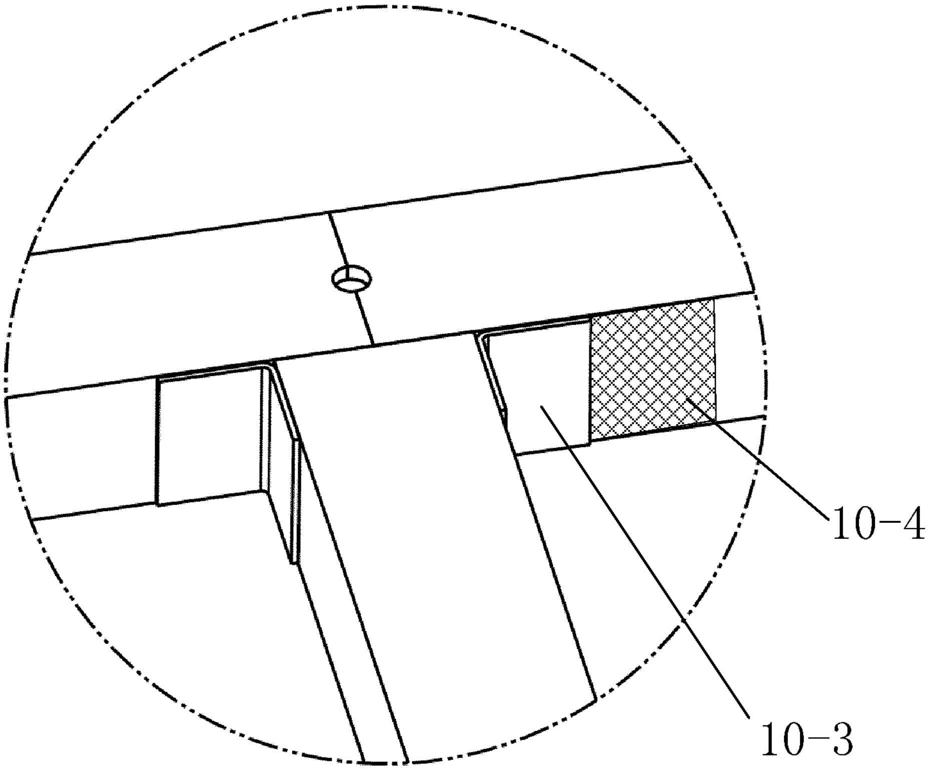


FIG. 7

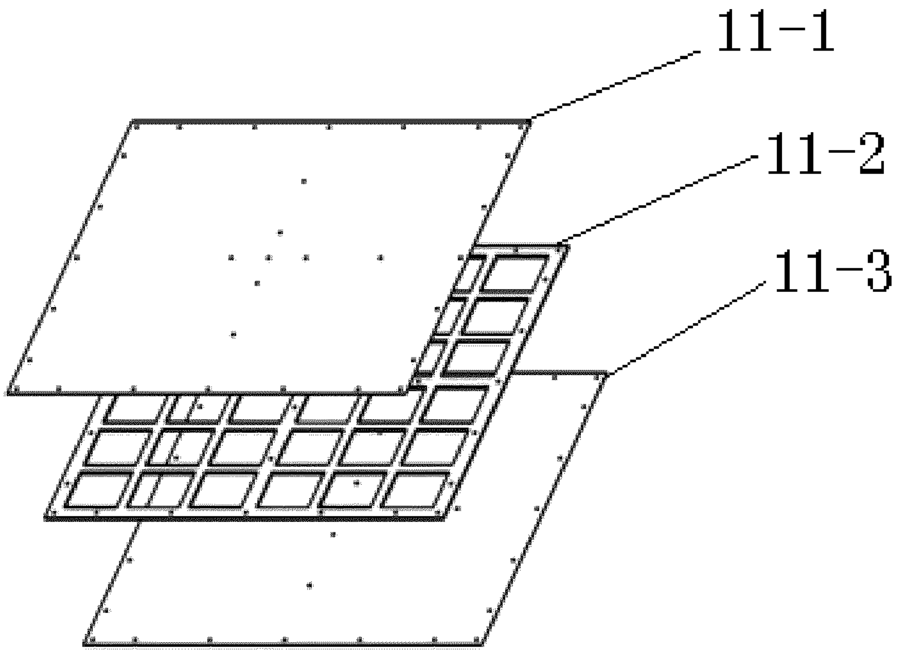


FIG. 8

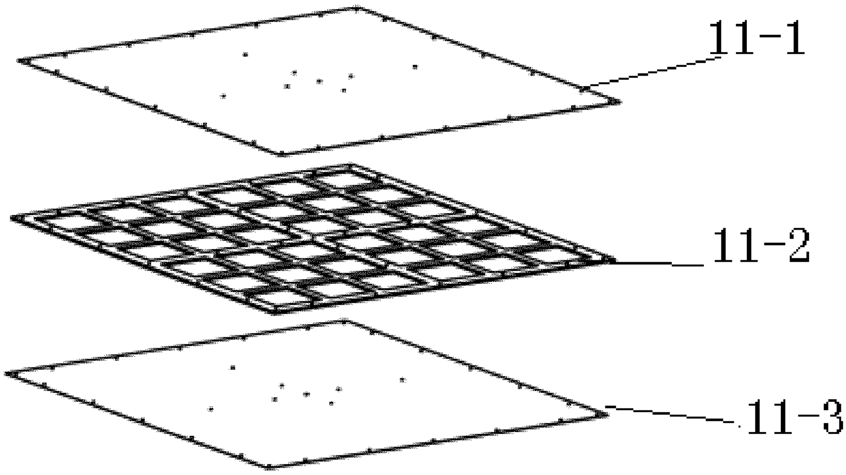


FIG. 9

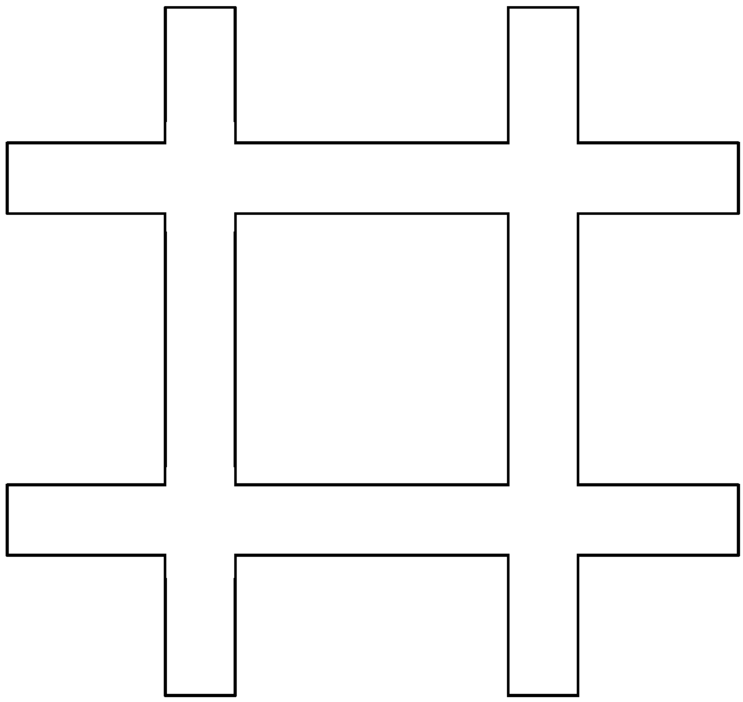

FIG. 10

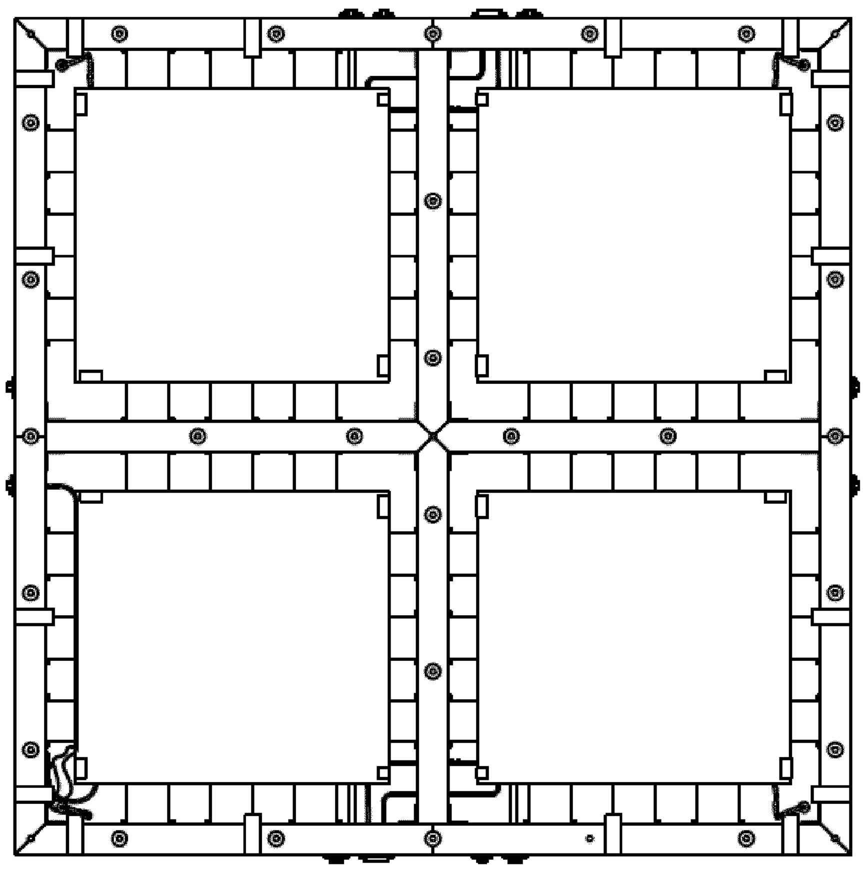

FIG. 11

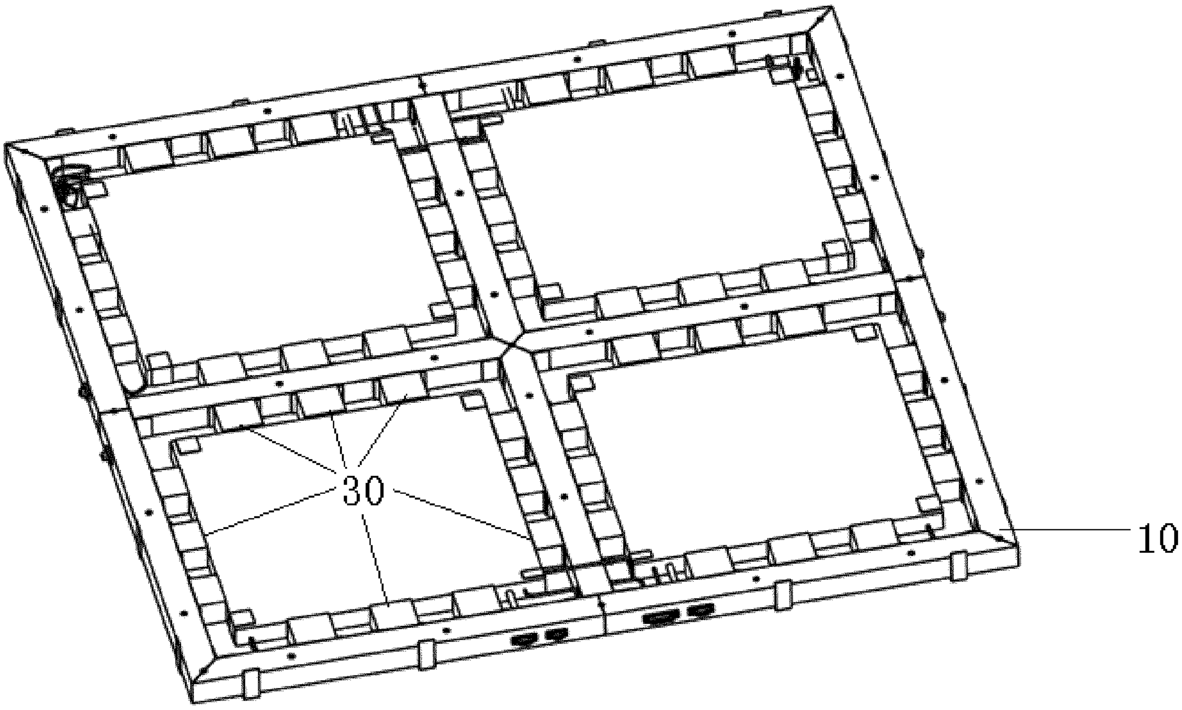


FIG. 12

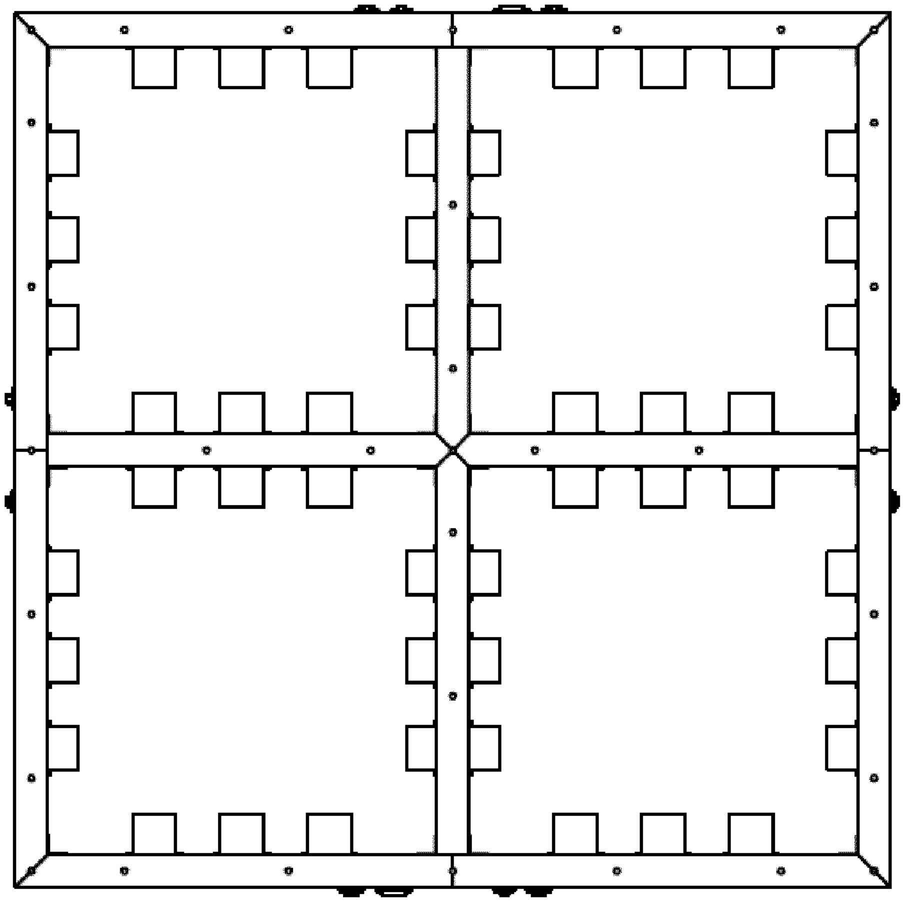

FIG. 13

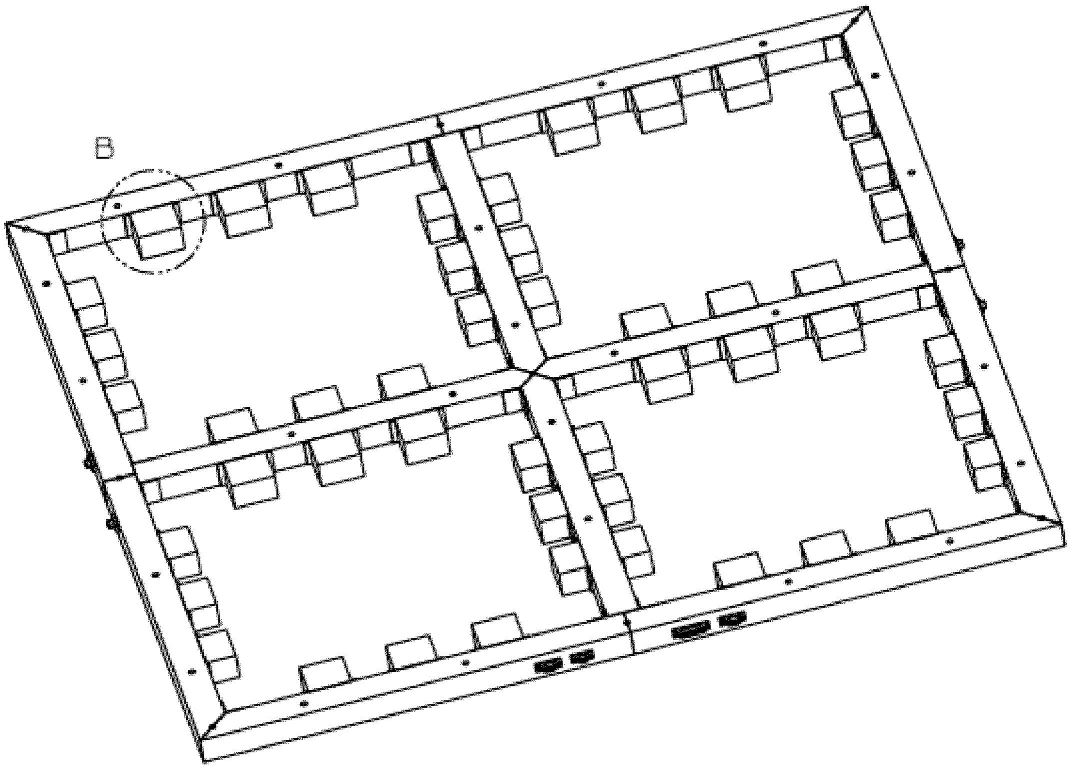


FIG. 14

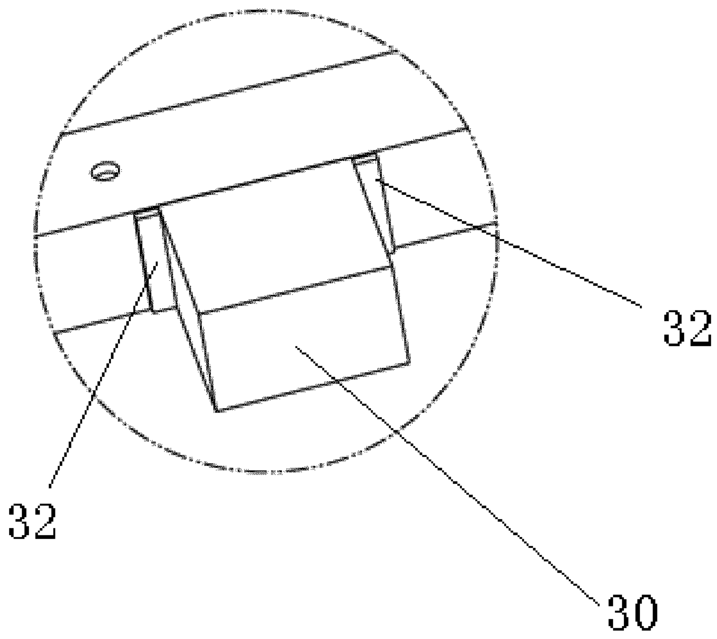


FIG. 15

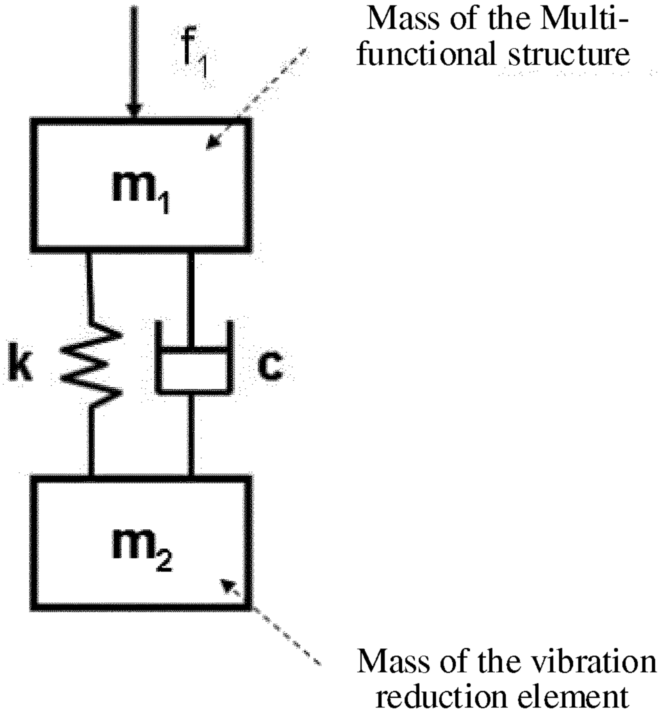
Mass of the Multi-functional structure
f1
m1
k
c
m2
Mass of the vibration reduction element

FIG. 16

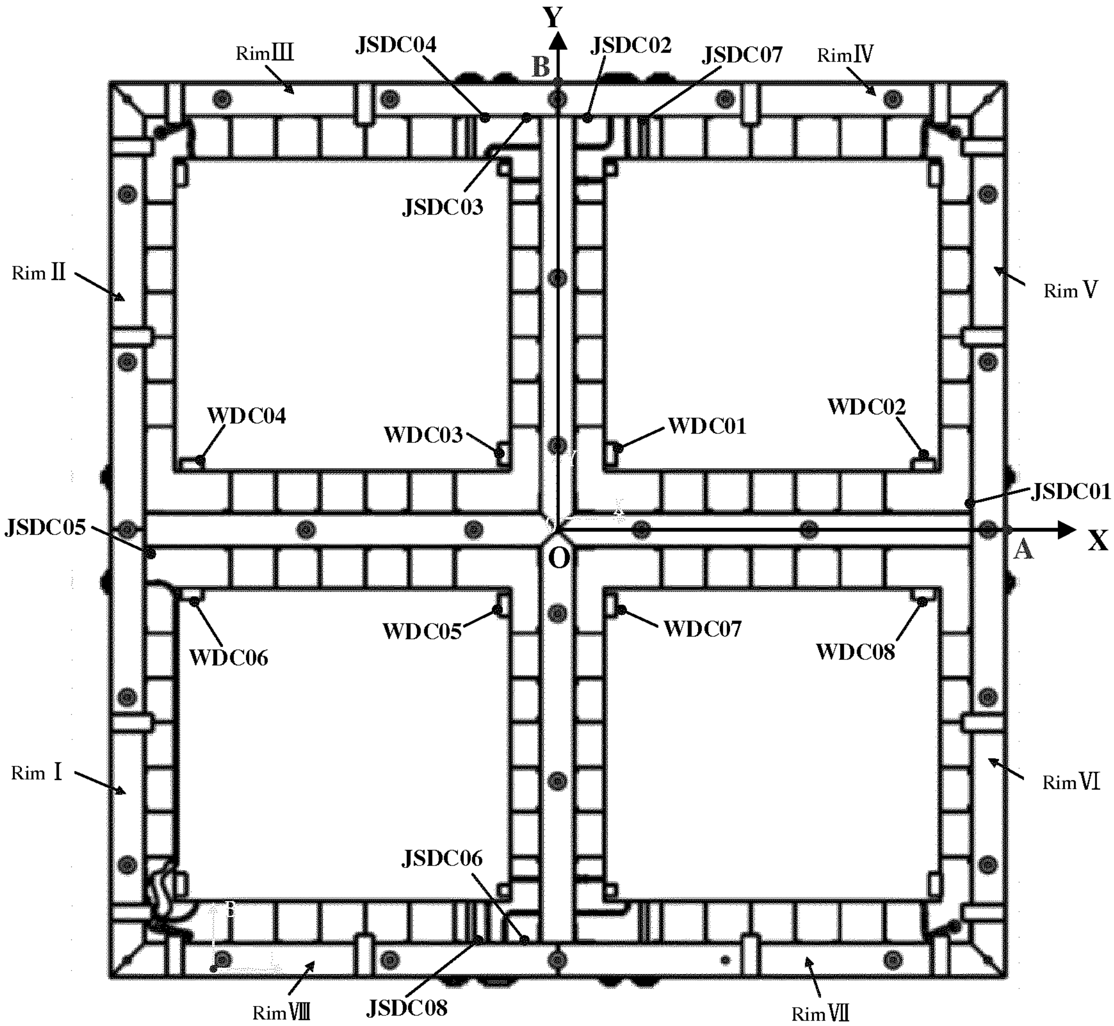
Y
B
X
A
O
RimⅢ
JSDC04
JSDC02
JSDC07
RimⅣ
JSDC03
Rim Ⅱ
Rim Ⅴ
WDC04
WDC03
WDC01
WDC02
JSDC01
JSDC05
WDC05
WDC06
WDC07
WDC08
Rim Ⅰ
RimⅥ
JSDC06
RimⅧ
JSDC08
RimⅦ

FIG. 17

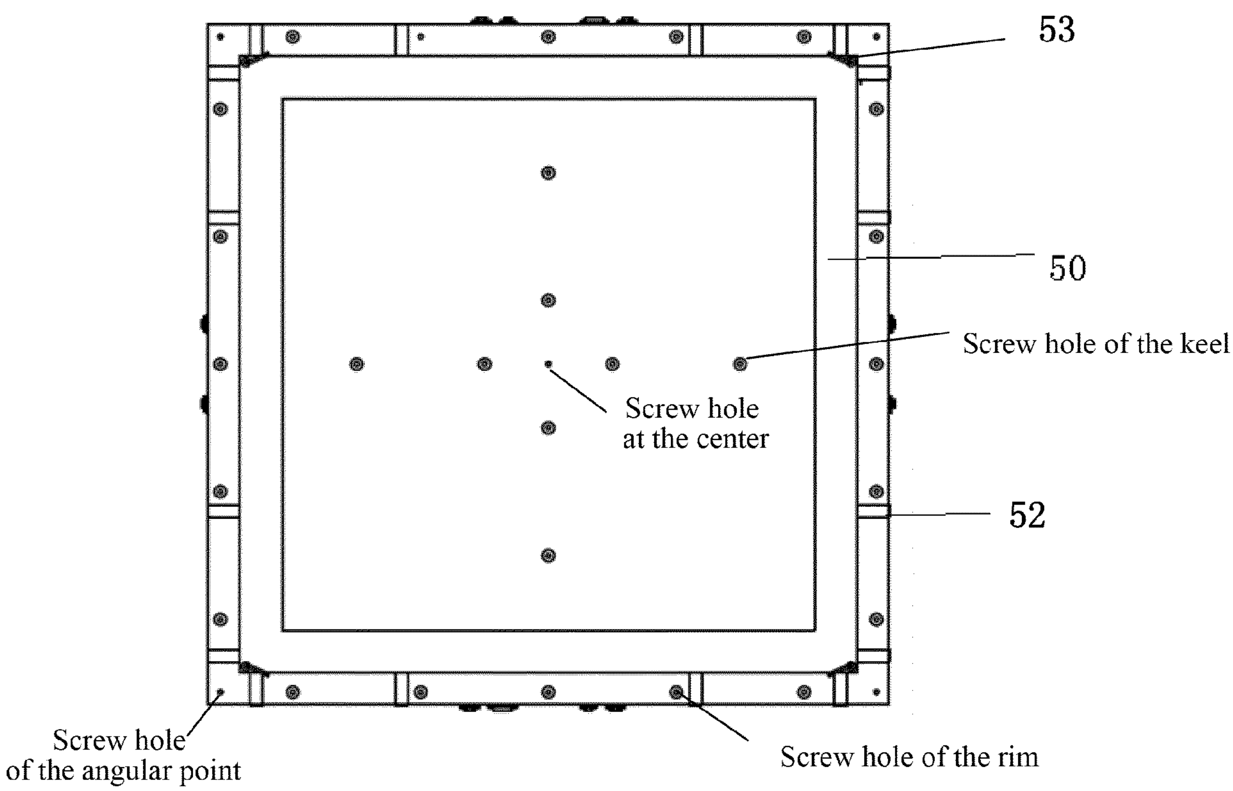
53
50
Screw hole of the keel
Screw hole
at the center
52
Screw hole
of the angular point
Screw hole of the rim

FIG. 18

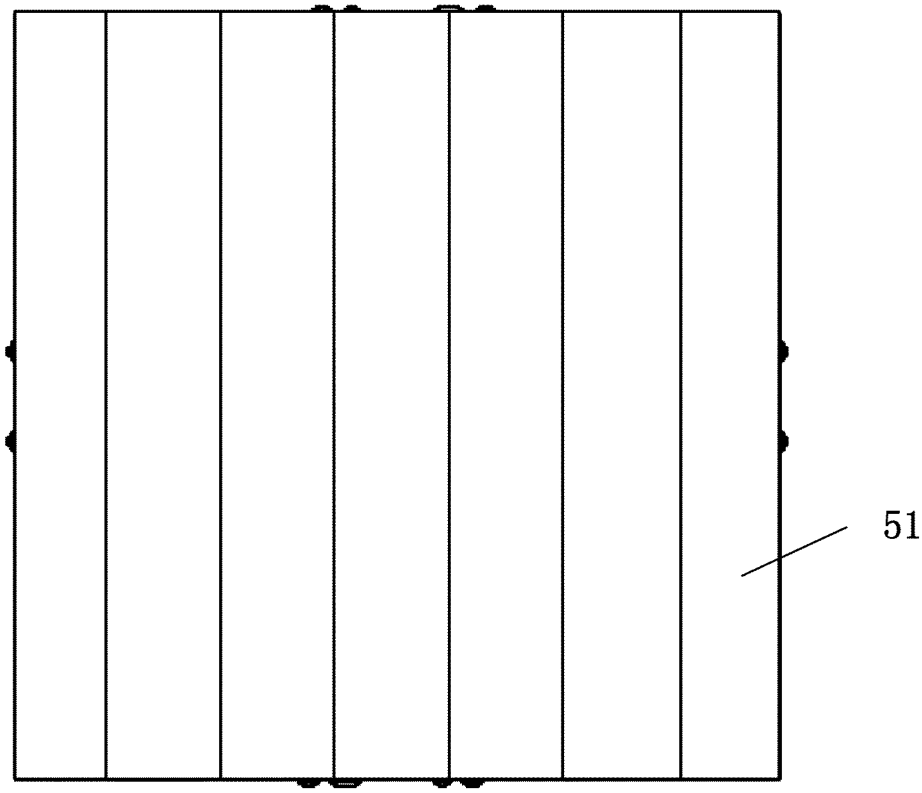


FIG. 19

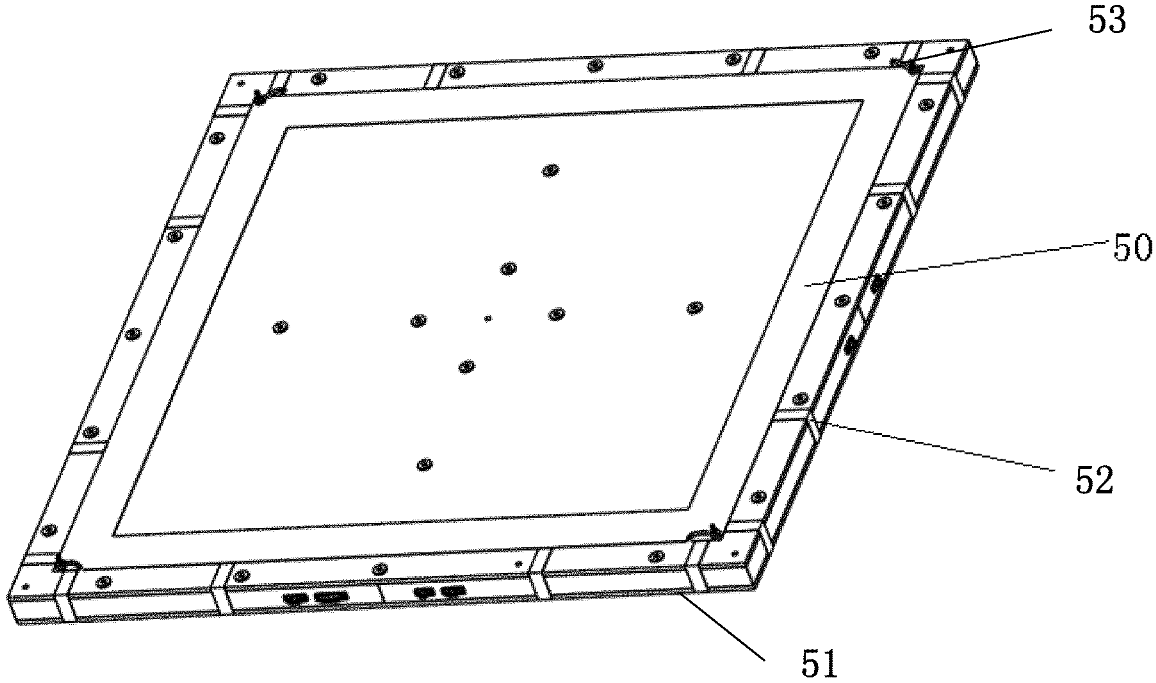


FIG. 20

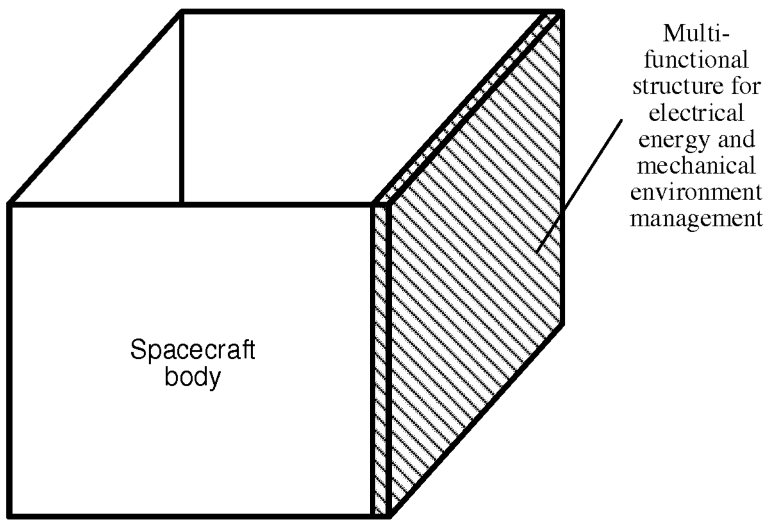
Multi-
functional
structure for
electrical
energy and
mechanical
environment
management
Spacecraft
body

FIG.21

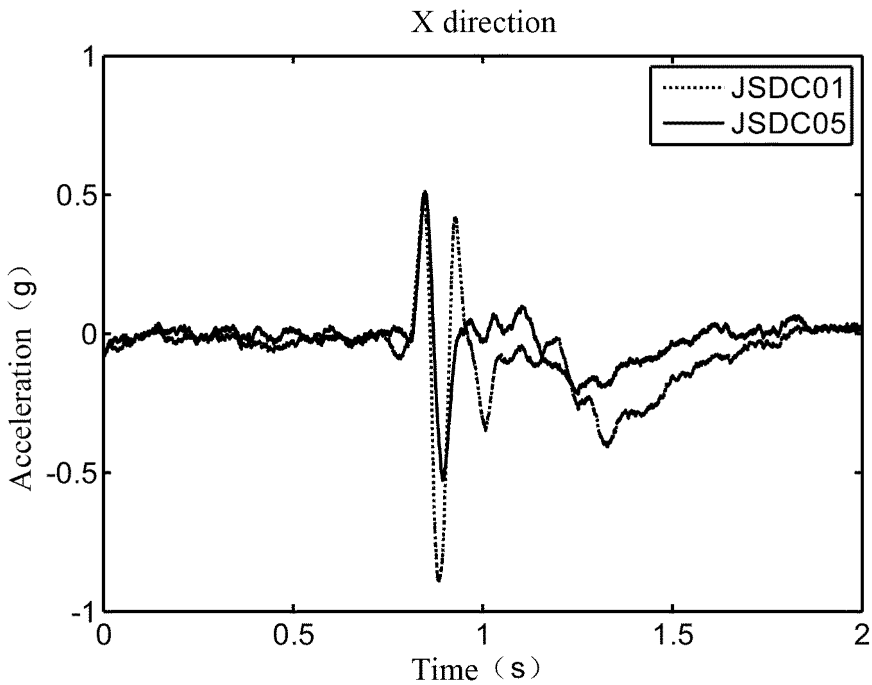
X direction
JSDC01
JSDC05
Acceleration（g）
1
0.5
0
-0.5
-1
0
0.5
1
1.5
2
Time（s）

**FIG. 22**

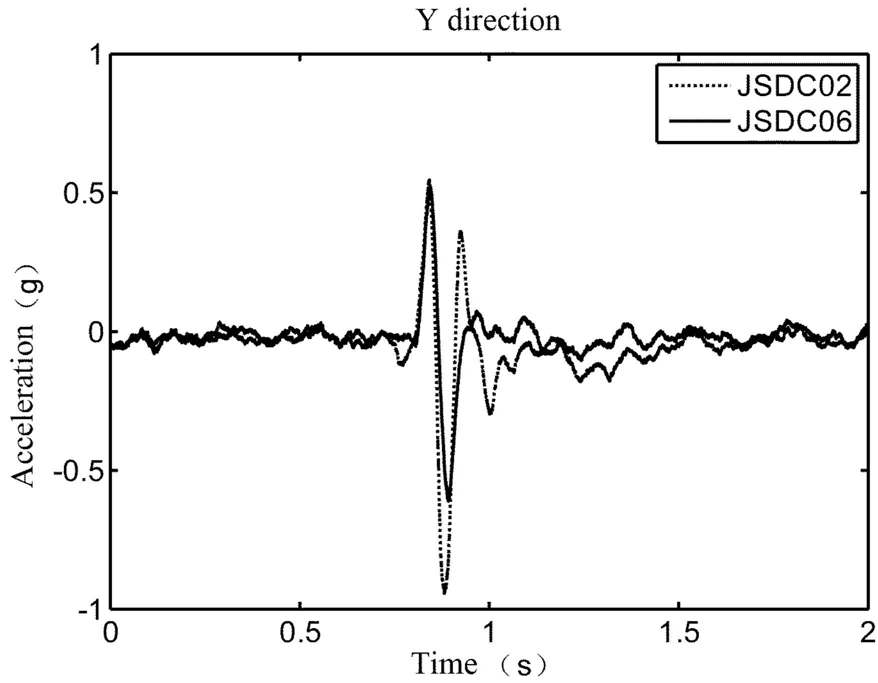
Y direction
JSDC02
JSDC06
Acceleration（g）
Time （s）
1
0.5
0
-0.5
-1
0
0.5
1
1.5
2

FIG. 23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2006234119 A1
- DE 4340007 A1